# EUROPEAN PATENT APPLICATION

(11) **EP 1 134 069 A1**
(43) Date of publication of application: **19.09.2001**
(21) Application number: 99969691.7
(22) Date of filing: 30.09.1999
(51) Int. Cl.: B29C 70/30

(54) **HOLLOW STRUCTURE OF FIBER-REINFORCED RESIN AND METHOD OF MANUFACTURING THE SAME**

(30) Priority: 30.09.1998 JP 27764198; 30.09.1998 JP 27840898; 10.03.1999 JP 6287299
(71) Applicant: TORAY INDUSTRIES, INC., Tokyo 103-8666 (JP)
(72) Inventor: SEKIDO, Toshihide, Otsu-shi Shiga 520-0046 (JP); KITANO, Akihiko, Ehime 791-0121 (JP); YOSHIOKA, Kenichi, Ehime 791-0121 (JP)
(74) Representative: Coleiro, Raymond
(86) International application number: JP9905395
(87) International publication number: WO0018566

(57) **Abstract**

A fibre-reinforced plastic structure with a hollow section which is characterized in that
(A) it is a fibre-reinforced plastic structure with a hollow section which is provided with at least one opening and with a main body portion having in the interior a cavity of maximum width greater than the maximum width of the aforesaid opening(s),
(B) the aforesaid main body portion is composed of a fibre-reinforced plastic where the reinforcing fibre has been impregnated with synthetic resin and, furthermore,
(C) the aforesaid main body portion has a solid of non-revolution shape where the interior maximum width (F) of the cavity is at least 0.5 m and the ratio (F/f) of the internal maximum width (F) of the cavity to the maximum width (f) of the aforesaid opening(s) lies in the range 1.1 to 500, and
(D) furthermore, the aforesaid main body portion is formed as an integral construction in which its totality substantially has no regions which are joined. This structure can be used for aircraft, automobiles and other such modes of transport, and for containers and the like.

## Description

### Technical Field

The present invention relates to a fibre-reinforced plastic (FRP) structure having a solid of non-revolution shape hollow section (hereinafter a 'fibre-reinforced plastic structure with a hollow section' is referred to as an 'FPR structure with a hollow section' or as a 'hollow FRP structure') such as, for example, an aircraft fuselage, an automobile body or a fluid transportation means, and to an improvement in the method of production thereof. In particular, it relates to an FRP structure with a hollow section having the shape feature of comparatively small openings compared to the size of the internal cavity and, moreover, which is light in weight and high in strength, so is ideal for use for modes of transport such as the aircraft and automobiles as aforementioned; and to a method of production which enables this structure to be produced simply and with good production efficiency.

### Technical Background

Recently FRP structures have been a focus of attention as structures in cases where a light weight and high strength are demanded, such as for example modes of transport like automobiles and aircraft, containers for the storage or conveyance of gases and liquids, sports goods such as golf club shafts and fishing rods, and building structures such as earthquake-resisting reinforcements.

Of these FRP structures, in the case of pressure vessels for example, hollow FRP structures with comparatively small openings are ideally employed. Such hollow FRP structures are normally produced by the so-called filament winding method in which resin-impregnated reinforcing fibre tow is wound onto a rotating liner and then curing carried out.

However, hollow FRP structures produced by the filament winding method are limited to solid of revolution shapes where the internal/external shape in the cross-section perpendicular to the axis of rotation is substantially circular in each case. That is to say, only solid of revolution shapes are known as FRP structures with a hollow section where the openings are small compared to the interior width (diameter). Moreover, in cases where the ratio of the interior maximum width to the maximum width of the openings is at least 1.1, it is not possible to withdraw the inner mould from the opening, so it is withdrawn for example by cutting the inner mould using a cutter as disclosed in US Patent 3,220,910. In such circumstances, there are limits to such a cutting system when forming a structure of the kind containing ribs.

Now, in the case of modes of transport, gasoline tank containers and the like, in order to reduce transportation costs it is naturally preferred that these be lightweight hollow structures and also light in weight but, if they are restricted to a solid of revolution shape, problems arise such as the internal space not being as efficiently employed as intended and the aerodynamic resistance, which depends on shape, not being optimized. Moreover, there are also problems in terms of design, and so the use of conventional solid of revolution shape hollow FRP structures, as they are, has been difficult.

If an FRP structural material which is not of hollow section and a number of hollow FRP structural materials with relative large openings are coupled together to form an integral unit, then it is possible to produce fairly complex shape hollow structures but, in such circumstances, the strength and rigidity at the regions of the joints is reduced and a weight increase is brought about by the jigs and the like employed in the coupling, so the particular characteristics of an FRP in being lightweight and high in strength and rigidity are readily lost. Moreover, there is the problem that the work required for the coupling brings about an increase in cost.

On the other hand, in the case of FRP structures with a hollow section used for large size modes of transport, where a number of openings of various shapes is demanded and which are comparatively complex overall, there are examples of structures which are composed of a plurality of FRP moulded elements with these being coupled together to form the structure as a whole. However, if all said plurality of FRP moulded elements have an open shape, the structure formed by coupling them together does not possess regions which are continuous in the circumferential direction, so there is the problem that the strength and overall rigidity as a structure tends to be relatively low.

Again, with regard to the aforesaid hollow FRP moulded elements with a closed space, that is to say having a continuous closed curved surface region in the circumferential direction, in the case where the sectional shape in which the closed curved surface region has been continuously formed is comparatively small, for example in the case of a pipe, moulding techniques have been established by pulltrusion or by the so-called filament winding method in which resin-impregnated reinforcing fibre tow is wound onto a mandrel and then curing performed, but it cannot be said that a moulding technique has yet been established for hollow FRP structures which are of comparatively large size with an overall length of several metres, and which also have openings at the ends or along the length, and where the closed curved surface region is not continuous over the entire length.

In other words, with conventional hollow FRP structures, because of limitations on their shape and dimensions, it has frequently been difficult to employ them favourably for example as modes of transport or as containers of various shapes.

Furthermore, in the case of production methods too, for the purposes of producing comparatively large moulded bodies, methods employing an elastic inner mould where moulding is carried out under internal pressure to expand said inner mould are disclosed in US Patent 5,059,377, JP-A-54-13571 and JP-A-11-48318, but these are totally different from the method where a dry reinforcing fibre substrate is bagged, and resin injected in the low pressure state, which is method of the present invention, and they are methods in which lay-up is performed using a substrate material to which resin has already been applied, after which blow moulding is performed, or where blow moulding is performed while heating a substrate comprising a woven mixture of thermoplastic fibre and reinforcing fibre. Consequently, there are problems such as poor working characteristics because of the resin tackiness and it not being possible to deal with detailed and complex shapes. In terms of structure too, no interior width is broader than the maximum width of the openings, so relatively simple structures are the objective.

In other words, there does not exist at present any method for dealing with the structures which are the aim of the present invention, which are comparatively large hollow FRP structures having an interior maximum width greater than the maximum width of the openings and where this interior maximum width is at least 0.5 m, and where the shape of the structure is of a solid of non-revolution shape such as a complex shape having a protruding rib structure arranged at the inner face.

The present invention has as its objectives to resolve the problems of conventional hollow FRP structures as described above, and to provide a solid of non-revolution shape hollow FRP structure having an integral construction, where the FRP characteristics of light weight, high strength and high rigidity can be manifested to a maximum, enabling it to be favourably used for modes of transport and for containers of various kinds; and to a method for the production thereof.

### Disclosure of the Invention

One embodiment of the fibre-reinforced plastic structure with a hollow section according to the present invention, which enables the aforesaid objectives to be realized, is a fibre-reinforced plastic structure with a hollow section which is characterized in that
(A) it is a fibre-reinforced plastic structure with a hollow section which is provided with at least one opening and with a main body portion having in the interior a cavity of maximum width greater than the maximum width of the aforesaid opening(s),
(B) the aforesaid main body portion is composed of fibre-reinforced plastic where reinforcing fibre has been impregnated with synthetic resin and, furthermore,
(C) the aforesaid main body portion has a solid of non-revolution shape where the interior maximum width (F) of the cavity is not less than 0.5 m and the ratio (F/f) of the internal maximum width (F) of the cavity to the maximum width (f) of the aforementioned opening lies in the range 1.1 to 500, and
(D) furthermore, the aforesaid main body portion is formed as an integral construction in which its totality substantially has no regions which are joined.

Another embodiment of the fibre-reinforced plastic structure with a hollow section according to the present invention is a fibre-reinforced plastic structure with a hollow section which is characterized in that
(A) it is composed of a plurality of moulded elements,
(B) at least one of these moulded elements is a structure which is provided with at least one opening and with a main body portion having a cavity in the interior and, furthermore, the section thereof has a solid of non-revolution shape,
(C) the aforesaid main body portion is composed of fibre-reinforced plastic where reinforcing fibre has been impregnated with synthetic resin and, furthermore,
(D) the aforesaid main body portion has in at least one location a portion forming a closed space in the circumferential direction section and which is formed as an integral construction substantially having no joined regions.

### Brief Explanation of the Drawings

Figure 1 is a perspective view showing an example of a hollow FRP structure where the present invention can be applied.

Figure 2 is a perspective view showing another example of a hollow FRP structure where the present invention can be applied.

Figure 3 is a perspective view showing still another example of a hollow FRP structure where the present invention can be applied.

Figure 4 is a perspective view showing still another example of a hollow FRP structure where the present invention can be applied.

Figure 5 is a perspective view showing still another example of a hollow FRP structure where the present invention can be applied.

Figure 6 is a schematic structural view showing an example of an FRP moulded body moulding method relating to the present invention.

Figure 7 is a schematic structural view showing another example of an FRP moulded body moulding method relating to the present invention.

Figure 8 is a sectional perspective view showing an example of a liner moulding method based on an inner mould with a concave groove, according to the present invention.

Figure 9 is a schematic structural view showing an example of an FRP moulded body structure relating to the present invention which is different from Figure 1.

Figure 10 is a perspective view of a hollow FRP structure relating to still another example of the present invention.

Figure 11 is a perspective view of a hollow FRP structure relating to still another example of the present invention.

Figure 12 is a perspective view of a hollow FRP structure relating to still another example of the present invention.

Figure 13 is a schematic structural view showing an example of the method of moulding the still another FRP moulded body relating to the present invention shown in Figure 9.

Figure 14 is a schematic structural view showing another example of a method of moulding an FRP moulded body relating to the present invention.

Figure 15 is a schematic structural view showing another example of a method of moulding an FRP moulded body relating to an example of the present invention.

Figure 16 is a schematic structural view showing still another example of the rib of an FRP moulded body relating to the present invention.

Figure 17 is a schematic structural view showing still another example of the rib of an FRP moulded body relating to the present invention.

Figure 18 is a schematic structural view showing still another example of the rib of an FRP moulded body relating to the present invention.

### Optimum Form for Practising the Invention

Below, preferred modes of practice are described and a detailed explanation is provided in relation to the hollow FRP structure with a hollow section of the present invention, its method of production and the inner mould used for the moulding.

Reference in the present invention to a hollow section indicates that in a given section of the hollow FRP structure the space formed in the structure interior is enveloped by an outer peripheral portion comprising moulded body and it does not have an opening or passageway through to the outside. Furthermore, a closed space indicates a region over which such a hollow section continues in the lengthwise axial direction. That is to say, it is a region which does not connect with the outside in the circumferential direction.

Now, with regard to this closed space, while it is not impossible for it to be a space which does not connect with the outside at all, like the interior of a ball, this is not very practical and, as a rule, it will connect to the outside via regions having openings at the ends of structure in the longitudinal direction or having openings part way along the length thereof, that is to say via regions which do not themselves form closed spaces. Now, there are no particular restrictions on the longitudinal direction length of such a closed space and this can vary according to the application and the objectives, so cannot be precisely stipulated but, broadly speaking, it is preferably at least 0.2 m and/or at least 10% of the overall length. Below this numerical range, it may lack practicality due to falling below the lower limit of rigidity for moulding a hollow structure.

Now, a solid of non-revolution shape denotes any three-dimensional shape which is not a solid of revolution shape. A solid of revolution shape essentially denotes a three dimensional shape obtained from the locus when a plane figure shape is rotated, and it includes the sphere, ellipsoid of revolution, cone, cylinder and multi-tapered cylinder, etc. As the solid of non-revolution shapes in the present invention, shapes which have an axis of symmetry are particularly preferred. Now, in the present invention the structure is not to be restricted to one where each and every section is non-spherical. A shape can still be a solid of non-revolution in its three dimensional form even though each section is spherical (for example, the case of a solid of spherical section where the equation for the longitudinal axis is Y = X² (-0.5 < X < 0.5), that is to say z² + (y - x²)² = (r² - 2*x²)² [-r < x < r, f = constant], etc). Naturally, these are included amongst the shapes of the structure of the present invention.

The solid of non-revolution shape FRP structure relating to the present invention comprises a hollow shape, and reference to a hollow shape denotes a shape which essentially possesses an inner space such as a shell shape, *tsuzumi* drum shape, pipe shape or the like, and the inner space and the space outside are connected by an opening at one or more than one location. Such openings can be utilized for the entry and exit of people or hands, the introduction or removal of luggage, or as inlets/outlets for accommodating grain, liquids, gases or the like inside.

One of the characteristics of the FRP structure with a hollow section of the present invention is that it has a hollow shape with an interior maximum width greater than the maximum width of the openings.

The maximum width of an opening in the present invention is the maximum value of the distances across the opening and, in terms of dimension, it denotes a large size of at least 1 m. For example, in the case where the opening is round, the maximum width of the opening corresponds to its diameter, while in the case where the opening is elliptical it corresponds to the major axis, and in the case where the opening is rectangular it corresponds to the diagonal. In the case where the opening forms a curved surface, the maximum width is taken as the maximum value of the straight lines drawn between any two points around the edge of the opening.

The interior maximum width of the cavity in the main body region in the present invention is the maximum distance across the inner space. In such circumstances, the direction in which the length is measured is in a plane parallel to the plane of the opening, and the maximum length within this parallel plane is taken as the interior maximum width.

Now, in the case where there are openings at two or more places, for such hollow FRP structures of the present invention the same applies to all said openings and the interior maximum width will be greater than the maximum width of the openings. Furthermore, the openings may also be other than at the two ends.

The ratio of the interior maximum width to the maximum width of the opening(s) needs to lie within the range 1.1 to 500, and it is preferred that it lie within the range 1.2 to 100. A ratio within the range 1.5 to 50 is still further preferred. If it is smaller than the lower limiting value of this range, the internal space will be insufficient, while if it greater than the upper limiting value then, in the case of a vehicle or container for example, cleaning or washing of the inside will be troublesome. Again, it is preferred that sections having a sectional maximum width (the maximum width within a given section) of at least 1.2 times (more preferably at least 1.5 times) the maximum width of the opening extend in the longitudinal direction at least 0.1 m (more preferably at least 0.5 m) and/or that they be at least 5% (more preferably at least 20%) of the total length. In such circumstances, the magnitude of the sectional maximum width of sections satisfying this condition may be the same or they may be different, for example they may continuously vary. Below the lower limiting value of this range, the interior space will be inadequate and the space for accommodating people may be narrow and uncomfortable. This is a particularly important condition in applications relating to modes of transport such as aircraft and cars.

Based on this characteristic of shape, it is possible to obtain an interior space which is comparatively large in terms of the size of the openings. On the other hand, there are shapes where it is essentially impossible to withdraw a body filling the internal space without division or distortion.

The solid of non-revolution shapes in the present invention include those with left/right symmetry and those with top/bottom symmetry. Due to the fact that it is a solid of non-revolution shape, the hollow FRP structure of the present invention can be applied to a variety of applications such as modes of transport and containers of various kinds. Modes of transport include airliners, planes, helicopters and other such flying machines, cars, buses, trucks, motorcycles, bicycles, and passenger ships, sailboats, motor boats, leisure craft and other such vessels, trains, high speed trains and other such rolling stock, and also distribution equipment and the like. As described below, the hollow FRP structure of the present invention is outstanding in its mechanical characteristics, so is suitable for large size structures of several metres and above.

Now, hollow FRP structure in this invention includes structures where the main constitutional portion is substantially integrally moulded without having joined regions, and also structures composed of a plurality of moulded elements at least one of which is composed of a region forming a closed space and substantially integrally formed.

The former does not contain parts joined together by means of rivets, bolts and the like, and is substantially integrally formed. Consequently, since there is no cutting of the fibre as in the case where there are parts which are joined together, the strength is high, the wall thickness can be reduced, productivity is high and it is possible to reduce the weight and lower costs. In particular, with a large structure of more than a few metres, the load due to its own weight is high and a limit arises in terms of the size of the structure where parts are joined together but, by integral formation and employing thin walls, larger structures are possible. However, there is no objection to the addition of fitments or the like by means of fastening or bonding. Furthermore, as a result of integral formation, since there are regions free of joined parts over the entire circumferential direction length, extremely high strength and rigidity are manifested and a highly reliable structure is formed. Moreover, it can be said to be an extremely low cost structure in that there is no need for the "criteria" (quality control and inspection) employed to ensure the strength of joined parts. Now, the joined parts referred to here are the joints used for structure formation and they do not include the fitment merely of accessories (such as hinges for door attachement, etc) by bolting and the like. Furthermore, it is preferred that the jigs (pins, screws, sheets and blocks, etc) used for accessory coupling which comprise metal or plastic be integrally formed beforehand by insert moulding.

A section in this main body portion circumferential direction forms a hollow section which constitutes a closed space. Moreover, closed space regions, where an integral structure is formed substantially without parts which are joined together, are preferably positioned at the ends of the aforesaid main body portion and/or in the centre thereof.

The second type of aforesaid structure is the case where a specified hollow FRP structure is constructed by coupling a number of moulded elements by adhesion or by local vacuum moulding, so the moulding of the individual moulded elements is easy and the total structure can be produced cheaply. Here again, the FRP moulded body which constitutes the chief structural part thereof has a region of hollow section having an integrally moulded structure extending around the entire circumferential direction length and forming a closed space, so at least in this part there is formed a substantially integral structure in which no joined parts are present. The greater proportion (preferably 80 vol% and more preferably 90 vol%) of the reinforcing fibre arranged in the circumferential direction within this FRP moulded element is not cut over a length of one lap or more, to give high strength and high stiffness, and to maintain a high strength and rigidity in the FRP moulded body as a whole. Consequently, even in the case of a hollow FRP structure constructed using a plurality of moulded elements, overall a high strength and high modulus are maintained.

Now, it is possible to produce a structure in which the portion forming a closed space and having a substantially integral structure is produced at the end of the aforesaid FRP moulded body and/or in the centre of said FRP moulded body.

Furthermore, by producing a joined structure comprising a plurality of moulded elements, to form the aforesaid hollow FRP structure as a whole, there may be realized ease of moulding and finishing of the respective moulded elements, and there may be realized ease of coupling of the moulded elements and ease of interior finishing when assembling the hollow FRP structure and producing the final product, so as well as production being simplified it is also possible to lower overall cost. Again, by forming suitable openings in the aforesaid FRP moulded elements, the coupling to other moulded elements can be simplified and, furthermore, finishing of the hollow FRP structure interior and internal decorative operations are made extremely easy. Consequently, openings are preferably placed at the ends.

In the case of both types of structure, in the portion where there are no joined parts over the entire circumferential direction length, there may be included either regions in which the FRP extends linearly in the circumferential direction or regions where it extends curvilinearly. Of course, on the inner or outer face of the hollow structure, there may be flat bodies, curved bodies or ribs or other such projections.

Moreover, being a substantially integral structure, there is no need for reinforcement by increasing the amount of material used (increasing the wall thickness) as in a joined structure, and the problem does not arise of the structure being overly divided and there being many regions requiring reinforcement, leading to a loss of the light weight which is characteristic of a composite material.

In order that such effects are reliably manifested, it is preferred that at least 20%, and more preferably at least 30%, of the total length of a structure used for a mode of transport or of a structure used for a container comprises a hollow FRP structure moulded as an integral structure. Of course, ideally the entire length of the structure used for a mode of transport or of the structure used for a container will be composed of said hollow FRP structure.

In order to secure still higher strength and rigidity, it is preferred that the inner face of the aforesaid structure has a projecting rib (or ribs) projecting in the radial direction thereof. Furthermore, said projecting rib preferably has a frame structure where a core material is present in the interior and this is surrounded by a skin layer containing reinforcing fibre. Now, with regard to the FRP structure of the present invention or section thereof, the term "radial direction" is not to be restricted to the radius of a circle. In the present invention, broadly speaking, a radial direction denotes a direction radiating towards the outside, taking the centre of gravity of the hollow section as the centre.

In the aforesaid structures, the main body portion is preferably formed with a shell comprising an aforesaid skin layer positioned on the outside and a core material positioned on the inside.

The inside of the aforesaid core material is formed preferably with a shell comprising fibre reinforced plastic skin layers. It is further preferred that the core material has a rib extending in the radial direction of the structure, and that it comprises a foam and that grooves be formed in the surface thereof.

The reinforcing fibre used in the fibre-reinforced plastic from which the main body portion is composed can be a known reinforcing fibre such as an inorganic fibre like carbon fibre, glass fibre, SiC type fibre, alumina fibre, boron fibre or metal fibre, or an organic fibre like an aramid fibre, high density polyethylene fibre, PBO (polybenzoxazole fibre), polyarylate fibre or the like, but from the point of view of light weight together with high strength and rigidity, the use of carbon fibre is preferred. In particular, carbon fibre having an elastic modulus in tension of 200 GPa or more, or carbon fibre of tensile strength 4 GPa or more is preferred. In the case of a mode of transport where there is the possibility of impact, the use of carbon fibre of elongation at least 1.5%, and more preferably at least 2.0%, which is outstanding in its impact resistance, is preferred. The carbon fibre elastic modulus and strength can be measured based on JIS-R7601, and the elongation can be determined by dividing the strength by the elastic modulus.

Now, in the case where the structure is subject to torsion, the torsional modulus of elasticity of the reinforcing fibre is preferably within the range 5 to 30 GPa. The torsional modulus of elasticity of a fibre can be measured by the method described in JP-A-1-124629.

Furthermore, in order to reduce the amount of thermal expansion/contraction of the hollow FRP structure and to suppress the occurrence of gaps at the openings, it is preferred that the coefficient of thermal expansion of the reinforcing fibre lies in the range -0.1 x 10⁻⁶ to 30 x 10⁻⁶/°C.

Again, where fuzz on the strands determined by the method of measurement described in JP-B-1-272867 is no more than 30 per metre, a structure of high reliability is obtained, so this is preferred. This is because, if there is more fuzz than this, there is a possibility of yarn breaks occurring during the moulding described below.

Glass fibre is preferred from the point of view of insulation, impact resistance and cost. Organic fibres are also preferred in cases where insulation is to be provided.

Where the hollow FRP structure serves as a mode of transport, it will be subject to frequent outdoor exposure, so there are the effects of rain and UV, and the possibility of being struck by lightning. Thus, in such circumstances, it is preferred that there be used a so-called 'hybrid fibre' where there is jointly employed aforesaid carbon fibre which is outstanding in its environmental resistance and glass fibre or organic fibre which is outstanding in terms of insulation. Hybrid types range from those where the different fibre types are interlaced at the yarn/filament level to those where they are distributed in layers or sheets. Furthermore, there are of course included those cases where they are distributed in strand form, as in a covered yarn.

In the case where the hollow FRP structure is a container, tank or a storage vehicle, there will be stored in the interior thereof grain or other such solids, gasoline or other such liquid, or gases of various kinds, so carbon fibre of low moisture sorption and/or glass fibre of high resistance to gas corrosion is preferred.

With regard to the form of the reinforcing fibre, there can be used a unidirectional preform, a woven material, a mat or the like, or combinations of these, but a continuous fibre form is preferred in the terms of the properties of the structure. In particular, it is most preferred that there be present reinforcing fibre which continues along the entire lengthwise direction of the structure. Woven material employing aforesaid fibre of elongation at least 2% is preferred because of its outstanding impact resistance. In the case of glass fibre woven fabric, there is little anisotropy and stress concentrations can be mitigated, so this is suitable for regions of stress concentration such as openings, holes, slits and the like.

Furthermore, in order to raise productivity, it is preferred that there be used a so-called thick reinforcing fibre tow comprising a bundle of 12,000 to 200,000 filaments.

The volume content of the reinforcing fibre is preferably in the range 35-70%. If the volume content is below this range, there is a tendency for properties of the structure such as strength to be lowered, while, conversely, if the content is too high, difficulties may arise with the resin impregnation, and there are problems such as increased cost. The proportion of aforesaid carbon fibre in the reinforcing fibre is preferably from 5 to 100%, by volume content. Now, the volume content can be measured by the method specified in JIS-K7052 or JIS-K7075.

As the matrix resin from which the FRP is composed, there can be used an epoxy resin, unsaturated polyester resin, vinyl ester resin, phenolic resin, modified epoxy resin or other such thermosetting resin, a polyamide resin, polyethylene terephthalate resin, ABS resin, polyetherketone resin, polyphenylene sulphide resin, poly(4-methylpentene-1) resin, polypropylene resin or other such thermoplastic resin, or a rubber material or the like. Of these, from the point of view of enhancing the mechanical characteristics, epoxy resins, unsaturated polyester resins and vinyl ester resins with good adhesion to the reinforcing fibre are preferred. Again, from the point of view of improving the impact resistance, nylon or other thermoplastic resin, or a modified epoxy resin where an epoxy resin is modified with a thermoplastic resin or rubber, is preferred. Again, in applications where nonflammability or flame retardance is demanded, such as for vehicles, a phenolic resin or a mixture of inorganic flame retardant with an unsaturated polyester resin or vinyl ester resin, is preferred.

The hollow FRP structure of the present invention can be produced on a high-performance low-cost basis by, for example, the resin transfer moulding (RTM) method in which a substrate comprising the aforesaid reinforcing fibre is laid-on or wound-around the outside of an inner mould after which resin is injected into the substrate and curing carried out. There may optionally be introduced into the substrate, between the reinforcing fibre and/or at one face thereof, a lightweight blown material comprising a polymer material, a ceramic material or a metal material, or a honeycomb material, powder, granular material, sheet-shaped material or the like.

The inner mould can be composed of various materials such as wood, plastic, foam, low-melting alloy, water-soluble polymer, wax, glass, gypsum, rubber, ceramic, paper, clay or ice. It will have a shape close to that of the target hollow FRP structure and it has the role of maintaining the three-dimensional configuration of the substrate until the cured or semi-cured state is attained. Hence, it may be removed after the curing or semi-curing of the resin. However, the inner mould may also be left as an integral part of the hollow FRP structure after moulding.

Moulding is possible using either a hollow or solid inner mould but a hollow inner mould is preferred, not merely because it is lightweight but also because, by applying a surrounding vacuum or applying an internal pressure and causing the inner mould to expand, it is possible to bring about straight aligning of the reinforcing fibre and an enhancement in strength by raising the FRP fibre content. When the inner mould is light in weight, then it has outstanding handling characteristics such as being moveable at the time of moulding, so it is labour-saving and safe. Again, even in the case where the inner mould is left in the FRP moulded body, it is still possible to ensure a large interior space. Furthermore, less material is used for the inner mould so this is advantageous too economically.

The substrate and the resin from which the hollow FRP structure is composed comprise the aforedescribed reinforcing fibre and resin, and at the time of the resin injection there can be adopted the so-called vacuum bag method in which the inner mould and the reinforcing fibre substrate are covered over with a bag film, then the pressure in the bag interior reduced and the resin injected. Again, as stated above, there can also be adopted a vacuum moulding method in which, with a covering material interposed between the inner mould and the reinforcing fibre substrate, pressure-reduction is effected between the inner mould and an outer mould described below, after which the resin is injected. In such circumstances, said covering material is preferably an elastic material. This is because, by possessing elasticity, even in cases of a complex shape such as when the interior structure of the moulded body has projections, moulding is possible without marked distortion of these projecting regions between the inner mould and the substrate. The covering material may be an elastic material comprising rubber or other polymer material separately produced from the inner mould or it may also be an elastic material formed as a coating or the like on the outer face of a splittable or integrally-formed inner mould. Furthermore, the elastic material need not merely secure a vacuum between it and the outer mould, but can also suppress resin accumulation in gaps between the substrate and inner mould caused by the slight discrepancies in inner mould distortion which readily arise at the corners of the projecting regions, such as ribs, formed on the inner mould, or it can facilitate mould release or can act to reduce distortion or movement of inserts such as fitments. In order that the shape of the moulded body not be harmed, the preferred thickness of the covering material is about 0.1 to 2 mm. Again, the elongation of the elastic material is preferably at least 3%.

Furthermore, the aforesaid covering material may also be used as a medium having the function of lowering the flow resistance of the resin and enhancing its diffusion efficiency (that is to say, as a resin diffusion medium), and for example if there is arranged a plastic net, mesh, mat or the like, the resin diffusion rate is increased, there is smoother flow into fine regions, and the moulding characteristics are markedly improved.

Again, it is preferred that grooves of depth in the range from a few millimetres to a few centimetres be formed in the inner mould surface. Specifically, it is preferred that the depth thereof lies in the range from 1 to 50 mm (more preferably 3 mm to 1 cm) and that the spacing of the grooves is about 5 to 900 mm (more preferably 10 to 100 mm). Moreover, the grooves may mutually cross or they may be formed in parallel. Such grooves form channels in which the resin flows at the time of the resin injection. They also form passageways for the air inside the bag to travel along when a vacuum is applied, so that air from within the substrate is readily eliminated and the resin passes everywhere throughout the substrate (to envelop the individual reinforcing fibres). Thus, mouldings are obtained which have few voids, possess outstanding mechanical properties and are of high reliability.

Now, the amount of voids in the hollow FRP structure is preferably no more than 2% by volume and more preferably no more than 1.5%. The void content can be determined from the specific gravity but, as an alternative method, any section of the moulded body is abraded using sandpaper (fine material of grade #1000 or better) and buffing (particle size of the polishing powder no more than 5 µm) until the fibre is exposed, and then the area of voids determined using an optical microscope at a magnification of 500. In such circumstances, a more accurate measurement of the void content can be made by taking an observation area of at least 50 mm².

In the case of a hollow FRP moulded body produced in this way, where ribs are formed on the inner face of the FRP corresponding to grooves in the inner mould, the rigidity is raised and a more stable structure is formed. In particular, in flat planar regions of large area, buckling is made more difficult by ribs and so this is particularly preferred for structures employed for modes of transport and the like.

In terms of enhancing the rigidity of the hollow FRP structure, it is preferred that there be provided, for example, an aforesaid rib-shaped liner in the interior of the hollow FRP structure. In particular, in structures for modes of transport having three or more openings, a liner is extremely effective for enhancing the rigidity. As the liner, there can be used a reinforcing fibre-containing polymer or ceramic sprayed material, a gel coat, a phenolic or other face panel, a titanium alloy, aluminium alloy, magnesium alloy or other light metal sheet or rod material, various types of foam material, and combinations of two or more of these materials. The liner does not need to be present over the entire inner face of the hollow FRP structure, and it may be provided locally, for example around openings or in regions which include the centre of a broad curved face or flat face portion. The liner may be, for example, a FRP or metal stiffener, spar, stringer or the like which is separately moulded from the hollow FRP structure, or it may be a stiffener, spar, stringer or the like integrally-moulded along with the hollow FRP structure. Now, stiffener, spar and stringer refer to, for example, a girder, rib, framework, frame or reinforcing material.

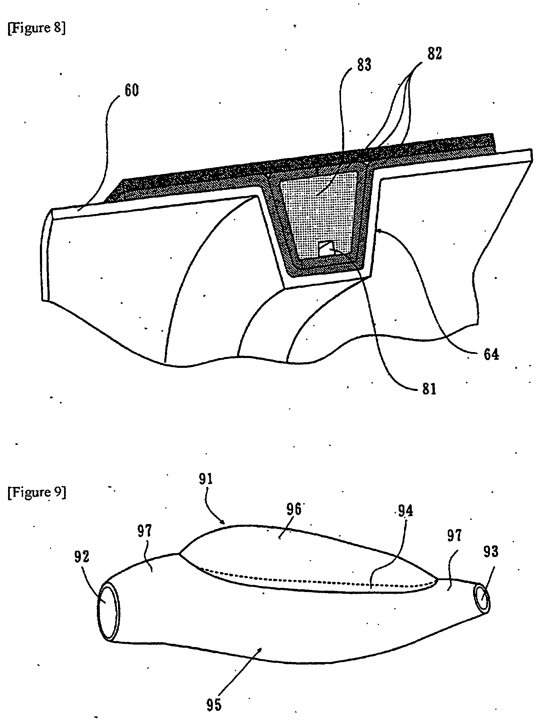

The cross-sectional shape of the liner may be round, C-shaped, hollow square-shaped, hat shaped, T-shaped, I-shaped, Z-shaped, S-shaped or the like. The C-shape and hat-shape sections, which are hollow, are preferred in terms of enhancing rigidity, and furthermore the introduction of a lightweight material such as a foam into the hollow region is further preferred (see Figure 8). In Figure 8, there is a concave groove 64 provided on the outer face of the inner mould which is used for moulding the liner and there are preferably a plurality of such concave grooves for rigidity enhancement by the liner. Again, if the liner has a cavity, this is preferred in terms of weight reduction, and it can also be advantageously employed in some applications, such as for the circulation of a fluid for heating/cooling, as flow channels for fuel, lubricating oil or the like, or as passages for wiring or the like. Now, in an FRP liner, it is preferred that there be employed unidirectionally-aligned reinforcing fibre, for raising the rigidity.

Again, providing a groove in the aforementioned lightweight material so as to carry out the resin impregnation more effectively, also constitutes a preferred embodiment. Specific examples of the lightweight material are urethane foam, polystyrene foam, polyethylene foam, polypropylene foam, phenolic foam, urea foam, polyvinyl chloride foam, silicone foam, epoxy foam, polyimide foam, polyester foam, melamine foam and other such lightweight foams, and wood such as balsa wood or the like, where these have an apparent specific gravity in the range about 0.02 to 0.9. Of these, polyimide foam is preferred in structures for modes of transport, where fire retardance is strictly demanded. The torsional rigidity of wood such as balsa wood is high and it does not readily buckle under shear, so it is also preferred. The aforesaid groove in the lightweight material provided for resin flow may also serve as the groove 81 shown in Figure 8 in the resin-filled state, or it may be different therefrom.

By suitable selection of the type of liner, it is possible to improve properties of the structure such thermal insulation, vibration damping, sound proofing, impact resistance and the like.

At the time of the production of the aforesaid hollow FRP structure, the application of pressure to the outside of the substrate material by placing in an outer mould which divides into two or more parts, is also preferred. The outer mould may be in direct contact, or in indirect contact via a buffer layer such as a bag film, rubber or air cushion. The most preferred pressure lies in the range from 0.5 kg/cm² to 20 kg/cm². By the action of an exterior pressure, the solubility of gas incorporated into the resin is raised, with the result that voids in the FRP moulded body are reduced and the mechanical properties of the structure are enhanced. If the outer mould is a material such as metal with high rigidity, the clasping force can be increased. Again, by accurate finishing of the inner face of the outer mould, it is possible to give the surface of the hollow FRP structure a smoother finish. By providing a smooth finish, the mechanical processing of the surface which has been necessary hitherto becomes unnecessary and so costs can be reduced. A smooth surface in the case of a mode of transport not only lowers air resistance and improves fuel efficiency, but it also reduces noise such as that produced by rushing wind and the like. Again, in cases of falling rain and the like, there is the advantage that the water droplets can run off. In addition, being smooth, painting is easier.

When performing moulding using an outer mould, there should be provided a vacuum port for pressure reduction and a port for resin injection in the outer mould or inner mould. If provided in the outer mould, the usability is excellent, while if provided in the inner mould there is the feature that no marks are left in the outer face of the moulded material. Thus, appropriate selection may be made. Again, there is also the possibility of providing these ports other than in the outer mould or inner mould by design of the mould or jig structure.

With regard to the material for the outer mould, in the case where heat resistance or high accuracy is required, a metal material or ceramic material is preferred, whereas in the case where lightness of weight or economy are necessary, an FRP or wood material is preferred.

The outer mould is dividable into two or more parts, with more parts being used the more complex the shape, such as when the inner mould has projecting regions, and this facilitates removal from the outer mould. Taking into account a balance in terms of cost, it is most preferred that it can be divided into about 3 to 6 parts.

Methods for heating the outer mould include direct heating methods such as inserting a heating element into the outer mould or using a flow of heating medium, and indirect heating methods such as with an infrared heater or other such heater, or piping through which a heating fluid circulates, provided in the vicinity of the exterior surface of the outer mould. In the case where the outer mould is made of metal, it is possible to perform heating by passing electrical current through the outer mould. Direct heating is preferred in that the resin curing time can be reduced and the moulding cycle shortened. Again, it is also effective in that it is possible to increase the maximum attainable temperature. Indirect heating is useful in cases where it is necessary to simplify or lighten the outer mould. Indirect heating is suitable when the thickness of the outer mould lies in the range about 2 to 300 mm.

Furthermore, it is also possible to produce a structure where a covering layer is integrally formed at the outer face of the FRP. For example, in order to obtain a smoother surface, it is preferred that a gel coat be applied to the inside of the outer mould, so there is integral moulding of the gel coat with the FRP. Any known gel coat can be used such as an epoxy gel coat, polystyrene gel coat or urethane gel coat, but it is further preferred that there be used a resin of the same type as the FRP or a material of similar coefficient of linear expansion. This is because thermal stress produced by temperature differences may cause separation to occur. The gel coat is not a structural member so it is preferred that its thickness lies in the range from 0.1 to a few mm. Within this range, the lightness is not impaired and the surface smoothness is maintained.

In order to enhance the operational characteristics when arranging the substrate material on the outer face of the inner mould and to achieve close adhesion to the outer mould, it is effective to apply an outwardly-directed force in the inner mould, for example to apply an internal pressure. The preferred pressure lies within the range 0.5 to 10 kg/cm², with the range 1.0 to 5 kg/cm²G further preferred, In such circumstances, the internal pressure may be applied by means of a gas such as compressed air, or, where required, there may be used water or other such non-compressible pressurizing medium. Appropriate control of the internal pressure during the production process is also effective. For example, control is possible such that, when arranging the substrate, priority is given to workability and so the pressure is lowered, and then thereafter the pressure is raised so that the inner mould expands, causing the slack in the reinforcing fibre of the substrate to be eliminated.

Furthermore, depending on the particular inner mould material, it is also possible to carry out the same kind of control by means of heat. That is to say, the same effects as applying pressure can be obtained by heating the inner mould and causing it to expand.

Moreover, in the case where the inner mould is a magnetic substance or contains a magnet, it is possible to cause the inner mould to expand by applying a magnetic field. Since there is no contact, and since adjustment of the amount of deformation of the inner mould is readily possible by control of the magnitude of the magnetic field, the accuracy of the moulded body can be increased. Typical examples of magnetic substances are ferrite, permalloy, nickel alloy, iron and other such metal materials, of which super-permalloy, supermalloy and other such ferromagnetic materials containing molybdenum, manganese and chromium, and ferromagnetic materials such as manganese-zinc ferrite, nickel-zinc ferrite and magnesium-manganese ferrite are preferred, in that a large force can be generated when the inner mould is made to deform.

Again, by inserting reinforcements which can be assembled or enlarged such as umbrella reinforcements, rigidity can be enhanced and it is also possible to facilitate the securing of the semicured substrate and the carrying out of the reinforcing fibre winding operations.

In the case where the inner mould comprises an airtight material such as a plastic or an FRP, the internal pressure may be directly applied to the inner mould but in the case of a dividable inner mould assembled from block-shaped and/or sheet-shaped materials comprising wood or metal for example, a balloon may be inserted into the interior of the inner mould and this then made to expand.

Now, in the case where an outer mould is used in direct contact with the substrate, for the purposes of enhancing the release properties between the outer mould and the FRP which forms the moulded body, it is preferred that a release material be inserted between the FRP and outer mould. As examples of the release material, there are "Teflon" film and "Teflon" rubber or silicone rubber. In the case where film is used, the outer shape of the inner mould will be roughly the same as the hollow FRP structure, but in the case of a semi-solid such as silicone rubber the inner mould does not necessarily need to resemble the target structure. It can have a cheaper and more simple form, and the shape of the target moulded body can then be imparted to the semi-solid. Since the level of distortion of a semi-solid material is high, even when it has a rather complex shape with, for example, projections or the like, it can be removed without damaging the structure. Moreover, a semi-solid material can also be reused after carrying out the release treatment. If, when arranging the substrate on the outer face of the inner mould the reinforcing fibre of the substrate extends for two or more laps of the circumference of the hollow inner mould, the pressure from the hollow inner mould is concentrated only in the reinforcing fibre and it is difficult to uniformly apply pressure to the structure as a whole. Moreover, by applying pressure to the interior, the hollow inner mould is made to expand radially and, furthermore, the reinforcing fibre also made to move a little to produce a slack-free state, so if the fibre extends for two or more laps then this movement will be impeded. As a result, the FRP structure may not be moulded to the desired shape and dimensions, and the escape of bubbles or the diffusion of resin may be inadequate, so that the characteristics of the FRP structure are not fully manifested. Consequently, it is preferred that arrangement of the substrate be carried out such that reinforcing fibre does not extend continuously for two or more circuits of the hollow inner mould, that is to say it does not extend continuously over two or laps of the circumference of the interior space of the hollow FRP structure. Now, reference here to the arrangement being carried out such that it does not extend continuously for two or more laps, means that at least 80 vol% (more preferably 90 vol% and still more preferably 95 vol%) of the reinforcing fibre in the FRP does not extend continuously for two or more laps, and it is not intended to exclude the case where even one reinforcing fibre extends continuously over two or more laps.

Furthermore, the hollow FRP structure preferably has parts which are integrally moulded over the entire circumferential direction length. Such parts integrally moulded over the entire circumferential direction length need not necessarily be formed within a single section and, for example, they may be formed as parts extending over the entire circumferential direction length while zigzagging or meandering in the circumferential direction.

Any method may be employed for the arranging of the substrate, but since the hollow FRP structure of the present invention has a three-dimensional form the positions of the substrate are staggered during the arrangement operation and in order to prevent slippage there is preferably used a substrate retainer. There can be used various types of substrate retainer, such as the hook type having for example a C-shape, or the adhesive or tacky adhesive type. In the case of the hook type, this may be made of metal, resin or FRP for example, and when a suitable resin is employed this can be caused to melt as a result of the heating in the FRP structure moulding process, so there are no adverse effects on the characteristics of the FRP structure. Again, if there is used a substrate retainer made of metal, there can be used ultrasound, X-rays or a metal detector to determine whether or not the appropriate number of retainers has been used or to assess whether or not the position of the retainers has slipped during the moulding. Of course, besides metal, a resin can also be used and in such circumstances selection may also be such that it does not melt-away following moulding. As the resin, there may be used matrix resin mixed with a solvent such as acetone to reduce the viscosity, and by spraying this onto the reinforcing fibre substrate with a sprayer, the substrates can be temporarily held together, or the substrate can be temporarily fixed to the mould by the tackiness thereof.

Furthermore, as a method of substrate retention, a method using magnetic force has high production efficiency and is preferred in terms of the environment at the production site. Specifically, there is the method of securing the substrate and the inner mould by magnetic force between a magnetic material such as a metal provided on the inner face side of the hollow inner mould and metal or a magnet arranged on the outer face of the substrate, or the method of securing and fixing the substrate to the inner mould by a magnetic force acting between a magnetic material and/or magnet mixed with or inserted into the interior of the hollow or solid inner mould and a magnetic material and/or magnet arranged outside of the substrate. The magnetic material or magnet may have any shape but if it has a strip shape then it is possible to secure the substrate loosely over a comparatively broad range, while with a spot-shape local firm retention is possible. With a frame shape, retention is possible in the shape of the frame.

The inner mould may be extracted after the moulding, or part or all may also be left as part of the structure. Where the inner mould is hollow, and it is to be removed then it can be readily stripped away from the inside, while if it is not to be removed but left, then the interior space of the structure is maintained in the desired shape. Again, a release treatment can be performed at locations where the inner mould is to be stripped away, or a release film such as "Teflon" may be inserted.

By means of the grooves provided in the outer peripheral face of the hollow inner mould, elimination of bubbles and diffusion of the resin can be conducted efficiently and it is possible to obtain a large structure with outstanding strength and stiffness. Again, by means of these grooves, it is possible to provide ribs for further raising the strength and rigidity of the hollow FRP structure after moulding.

The inner mould used for moulding the hollow FRP structure of the present invention can be produced by various hollow structure production methods but, of these, it is possible by the so-called blow moulding method to produce comparatively large and quite complex shapes efficiently to a desired thickness. By providing rib-shapes in the outer mould used for the blow moulding, it is possible to form grooves in the outer face of the inner mould easily.

The material of the inner mould is not particularly restricted but a thermoplastic resin suitable for blow moulding such as polyethylene terephthalate, polyethylene, polyvinyl chloride, polyphenylene ether, polypropylene or the like is preferred. Of these, polypropylene containing glass fibre is preferred in that the rigidity of the inner mould can be markedly raised, so layering of the substrate and handling of the inner mould are facilitated. In such circumstances, the appropriate content of glass fibre is from 1% to 30%, and the glass fibre length is about 0.1 to 100 mm by weight average. Again, in the case where an outer mould is used, a material which is highly elastic, such as rubber, is preferred. In the case where the inner mould is to be removed following the moulding, at least the surface is preferably a material with outstanding release properties such as a silicone rubber.

Furthermore, in relation to the resin curing temperature, it is preferred that the heat resistance of the inner mould be higher than said resin curing temperature or provisional curing temperature. In particular, it is preferred that the heat resistance temperature be at least 5°C higher than the resin curing temperature or the provisional curing temperature, in that it is possible to suppress distortion of the inner mould during the resin curing or provisional curing and the dimensional accuracy of the structure can be ensured.
Now, the heat resistance of the inner mould is defined by the Vicat softening point measured in accordance with JIS-K6760.

The hollow FRP structure of the present invention can be produced via at least the following stages (A) to (D) in turn.
(A) An inner mould preparation stage in which an inner mould of cross-section having a non-circular sectional shape is arranged on a stand or the like
(B) A substrate arrangement stage in which substrate comprising in part or in total reinforcing fibre is arranged at the surface of the aforesaid inner mould
(C) A pressure-reduction stage in which the top of the aforesaid substrate is covered over with a bag and the interior pressure of said bag is reduced to below atmospheric pressure
(D) A synthetic resin impregnation stage in which synthetic resin is injected into the aforesaid reinforcing fibre and the interior of the substrate impregnated by uniform diffusion of said resin in the reinforcing fibre substrate face direction

It is preferred that there be added to these stages a stage in which the entire body is cured within the temperature range 50 to 200°C and integral moulding effected.

The hollow FRP structure of the present invention can also be produced via at least the following stages (A) to (E) in turn.
(A) An inner mould preparation stage in which an inner mould of cross-section having a non-circular sectional shape is arranged on a stand
(B) A substrate arrangement stage in which substrate comprising in part or in total reinforcing fibre is arranged at the outer surface of the aforesaid inner mould
(C) An outer mould arrangement stage in which the outer periphery of the aforesaid reinforcing fibre arranged substrate is covered by an outer mould
(D) A pressure-reduction stage in which the pressure is reduced between the aforesaid outer mould and the inner mould
(E) A synthetic resin impregnation stage in which synthetic resin is injected into the aforesaid reinforcing fibre and the interior of the base material impregnated by uniform diffusion of the resin in the reinforcing fibre substrate face direction

In such circumstances it is preferred that at least a part of the outer face of the inner mould be covered with a sheet-shaped covering material, and on top of this there is arranged the substrate comprising reinforcing fibre in part or in total, after which covering is performed from the outer periphery thereof with the outer mould, and then the region between said outer mould and inner mould reduced in pressure, and synthetic resin injected in a state with the aforesaid covering material expanded or caused to move in the direction of the outer mould and, by allowing said resin to diffuse through the reinforcing fibre substrate in the face direction, the interior of the reinforcing fibre substrate is impregnated with the resin.

In both the aforesaid production methods, it is preferred that there be used a hollow inner mould, that there be used an inner mould with resin flow channel grooves in the outer face, and that the synthetic resin be injected into the reinforcing fibre base material from said grooves.

In the latter production method, it is preferred that there be used an inner mould comprising an elastic material, that the interior of the inner mould be pressured with a fluid and said inner mould caused to expand in the direction of the outer mould, and that the fluid used for the internal pressurizing of the inner mould in such circumstances be compressed air, the pressure of which preferably lies in the range 0.05 to 1.0 MPa (0.5 to 10 kgG/cm²) and more preferably 0.1 to 0.5 MPa.

Again, in each of the aforesaid production methods it is preferred that, in the substrate arrangement stage (B), there be used a resin diffusion medium which enables resin to diffuse into the covering material, and that this medium be a reticulate material. As the inner mould a plastic, rubber material, water-soluble polymer material or wood is preferably employed, and it is preferred that it be moulded in the form of a hollow body by the blow moulding method.

Again, in aforesaid substrate arrangement stage (B), when arranging the substrate comprising reinforcing fibre, it is preferred that there be used, between substrates and/or between substrate and inner mould a substrate retainer which secures the substrate. It is preferred that moulded elements be integrally coupled by joining together by means of a local moulding method.

Furthermore, in each of the production methods, it is preferred that there either be added an inner mould removal stage for removing the inner mould from the integrally-moulded structure, or that the inner mould be left in the integrally-moulded structure as an integral part of the structure.

When producing a fibre-reinforced plastic structure composed of a plurality of moulded elements, at least one of which moulded elements has a solid of non-revolution shape section and is provided with at least one opening and a main body portion having a cavity in the interior, at the time of the coupling together of these moulded elements said moulded elements can be mutually joined together by arranging reinforcing fibre to straddle the joint regions between the moulded bodies, and then the joint regions are locally covered with a bag from above the reinforcing fibre, after which the pressure inside the bag is lowered and resin introduced, so that impregnation is effected.

In accordance with the hollow FRP structure of the present invention and method of production thereof, when compared to the conventional structures of solid of revolution shape based on the filament winding method, it is possible to increase degrees of freedom in respect of shape and it is possible readily to provide openings elsewhere than just at the two ends, that is to say at three or more locations. In the case of a mode of transport, it is preferred that there be provided three or more openings corresponding at least to the window and door functions. In the case of a container, it is preferred that there be three or more openings comprising an inlet, outlet and access port or reserve port (also referred to as an emergency port). In the case of an ordinary container, with just two openings, namely the inlet/outlet, internal cleaning and inspection are not possible, which is inconvenient. Now, of the three or more openings in a container, it is preferred that at least one opening be provided in the centre of the container in terms of usability.

Integrally-formed openings lead to a considerable lowering of costs, since there is no need to carry out after-processing such as cutting away moulded materials, and therefore there is a saving of materials and a saving of processing time. Again, since no machining is performed, there are no aforesaid inherent problems at the ends and reliability is outstanding. In cases where a large opening is required, it is preferred that more reinforcing fibre be arranged around the opening and that the wall thickness too be made greater than that in other parts.

From amongst the materials mentioned above, wood, plastic, lightweight foam, low melting alloy, water-soluble polymer, glass, gypsum and wax can be cited as preferred materials for an inner mould of the kind described above.

Of these, wood is preferred in that it is easily processed, withstands repeated use, and is light and heat resistant. In order for it to be extracted after the moulding, there can be used wood which has been machined in the form of small rods, sheets, keys or blocks, which are assembled as 'building blocks' so that the outer shape of the inner mould is the same as that of the target structure. Moreover, with wood, the aforesaid processing to provide grooves can readily be carried out.

As a plastic material, a thermoplastic resin which is suitable for injection moulding, blow moulding, rotational moulding or vacuum moulding is most preferred. The inner mould can be moulded to a shape essentially identical to that of the target FRP structure, and with fine grooves in the inner mould outer surface, at low cost. In particular, by blow moulding the inner mould can be moulded at high productivity and low cost. Again, because a thin-wall inner mould is formed, there is the advantage that if the inner mould is not removed the interior space of the moulded hollow FRP structure can still be kept large. While it will depend on the particular size of the structure, if the inner mould thickness lies within the range about 0.5 to 20 mm, the inner mould may be left behind in the moulded article. Again, a thin inner mould possesses transparency, and it is possible to check the state of resin impregnation of the FRP without removing the inner mould from the interior of the moulded article. Now, removal can be carried out by stripping or the like. In the case where a water-soluble polymer (for example water-soluble nylon) is used, it is possible to remove the inner mould by immersion in water for example.

Furthermore, biaxially-drawn blow moulding is also preferred. The draw ratio preferably lies in the range 1 : 1 to 1 : 3.

Preferred resins in the case of rotational moulding are high density polyethylene, medium density polyethylene, low density polyethylene, crosslinked polyethylene, PVC, polyethylene terephthalate, polyamide, polycarbonate, acrylic resin, polybutylene, fluoropolymer, polyester, polyacetal, epoxy resin and the like. In particular, it is preferred that the powder size lies in the range from 20 to 100 mesh, in that the inner mould thickness is uniform and the internal structure homogeneous, changes in shape at the time of heating or when pressure is applied are uniform, and the accuracy of the structure is enhanced. Furthermore, if there is mixed-in fine powder particles of 10 mesh or below, there are effects such as the movement of the particles being lubricated and particle flow smoothened, and heat transfer is facilitated, so an inner mould of homogeneous structure is readily obtained, and hence this is desirable. Again, of the aforesaid polymers, those with a melt index of 2 to 4 are particularly favourable for rotational moulding.

Polyethylene is especially preferred in cases where heat resistance and release properties are required. Of the types of polyethylene, crosslinked polyethylene is extremely outstanding in its heat resistance and its stress corrosion resistance, so is preferred. With regard to the mode of crosslinking, crosslinking with peroxides is preferred from the point of view of heat resistance, rigidity and impact resistance and, in particular, it is preferred that said crosslinking be conducted to a degree of crosslinking of at least 60% by means of dicumyl peroxide, in that the elongation is markedly raised and the impact resistance of the inner mould increased, and it is possible to suppress impact damage to the inner mould during the production process. This is because, in the case where an internal pressure is applied to the inner mould there is the possibility of gas leaks or the like arising at the time of pressurization as a result of damage caused by inadvertent impact during the production process.

Rotational moulding, when compared to injection moulding or blow moulding, is a low-pressure moulding method. Equipment costs are low and it is excellent economically. Furthermore, there is the feature that by using at least biaxial rotational moulding equipment it is possible to simultaneously produce inner moulds of different shapes, and so this can be applied to cases of the production of integral structures using different inner moulds. Again, it is possible to produce large size moulds when compared to blow moulding, and so it is more preferred the larger the size of the structure. Moreover, there are no residual stresses so levels of shape change when the inner mould is heated are stable, and thus this method is suitable in cases where high accuracy is demanded of the structure. In order to fix the wall thickness of the inner mould in rotational moulding it is preferred that the rotational ratio of the main shaft to the ancillary shaft be between 0.8 and 7. It is preferred that the rate of rotation of the main shaft lies in the range 3 to 40 rpm, for obtaining an inner mould of uniform thickness. Furthermore, in order to reduce residual thermal strain in the inner mould, to achieve uniform expansion when the inner mould is heated and to enhance the accuracy of the structure, it is preferred that the mould used for the rotational moulding be an electroformed mould or a cast mould. The preferred materials for the mould are aluminium alloys, nickel, carbon steel and stainless steel, which are excellent in their electro-thermal properties. Of these, aluminium and nickel are light and require little power for rotation, so are preferred.

Furthermore, the cooling rate has a direct influence on the contraction of the inner mould, dimensional accuracy such as deformation strain, and the uniformity of the structure such as the degree of crystallization and the crystal size distribution, so a suitable cooling rate is required. If the cooling is too slow, the density increases due to crystal growth and the mould shrinkage is increased. Moulding strains can be reduced by applying a gas pressure to the mould interior in the cooling stage. Again, if the interior is flushed out with an inert gas, oxidation can be almost completely prevented, so this is preferred.

In rotational moulding too, just as in blow moulding, it is possible to produce a multilayer structure, twin-wall structure, metal-insert structure, reinforced fibre structure or undercut structure.

Now, reference to a lightweight foam means a lightweight foam material such as a urethane foam, polystyrene foam, polyethylene foam, polypropylene foam, phenolic foam, urea foam, polyvinyl chloride foam, silicone foam, epoxy foam, polyimide foam, polyester foam or melamine foam, of apparent specific gravity about 0.02 to 0.9. By injecting a foam material into a female mould, it is possible to mould the inner mould under 'high cycle' conditions. Furthermore, by using the aforesaid specific gravity, there is no distortion during moulding. In the case of a foam material, removal can be carried out by mechanically abrading away or cutting away, or it can be readily driven-off using air pressure or water pressure. In the case of water pressure, a water pressure in the range about 7 to 20 kg/cm² has little possibility of damaging the FRP so this is preferred. Again, in the case of a lightweight foam, this need not necessarily be removed after moulding and indeed it is preferred that the foam be left in parts of the structure where thermal insulation is required, sound proofing is required, damping of vibration is required or impact resistance is required (that is to say, the inner mould can be left as a member equivalent to a liner). Moreover, on the premise that the inner mould is to be left, it is desirable that the material and thickness, etc, of the inner mould be selected beforehand so as to achieve the desired thermal insulation, noise insulation, vibrational properties and impact characteristics. Of course, there is no objection to adding a reinforcing material such as a filler like calcium carbonate or silica particles to the core.

A low-melting alloy inner mould can be re-used, so is preferred. Alloys of melting point about 40-200°C in which the chief component is bismuth, lead, tin, zinc and cadmium have a specific gravity of about 7 to 11. In the case where the FRP resin is a thermosetting resin, it is necessary for the inner mould to be heat resistant, and from the point of view of raising the curing temperature of the FRP it is preferred that the melting point of the low-melting alloy be in the range 80-200°C. Furthermore, taking into account operational safety, it is most preferred that it be within the range 80-140°C. Again, by not removing part of the low melting alloy and leaving it integrally combined with the FRP, there is the advantage that it is possible to provide screw threads, or welding or brazing is possible. In particular, where the FRP has thin walls, it is not possible to use screws, rivets, pins, nails or the like, but by having a metal material on the underside of the FRP it becomes possible to carry out so-called metal processing. Again, forming the hollow inner mould by arranging a metal pipe in the centre and providing a low-melting point alloy around this, is both lightweight and practical.

An inner mould made of glass is difficult to mould but it is transparent so, just as in the case of the aforesaid plastic inner mould it is advantageous in terms of checking the moulded state of the FRP.

A gypsum inner mould has the advantages of being cheap and having extremely high heat resistance.

A wax inner mould can be removed by heating, in the same way as a low-melting alloy. For this purpose, natural waxes are environmentally friendly. Again, the shape of a wax can be readily changed or corrected.

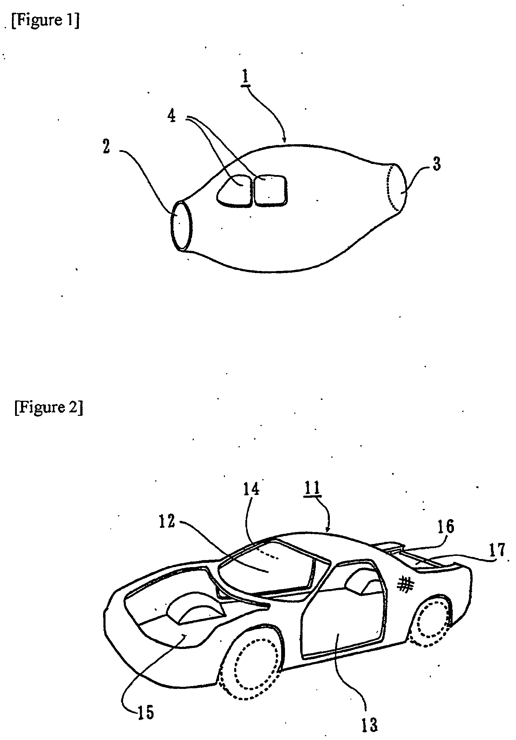

The hollow FRP structure relating to the present invention is a hollow FRP structure having an interior maximum width (of at least 0.5 m) which is greater than the maximum width of the openings, and the shape of structure is that of a solid of non-revolution, or alternatively it has at least three openings, and, specifically, it can be applied for example to the following kinds of hollow structures. Figures 1 to 6 show specific practical examples.

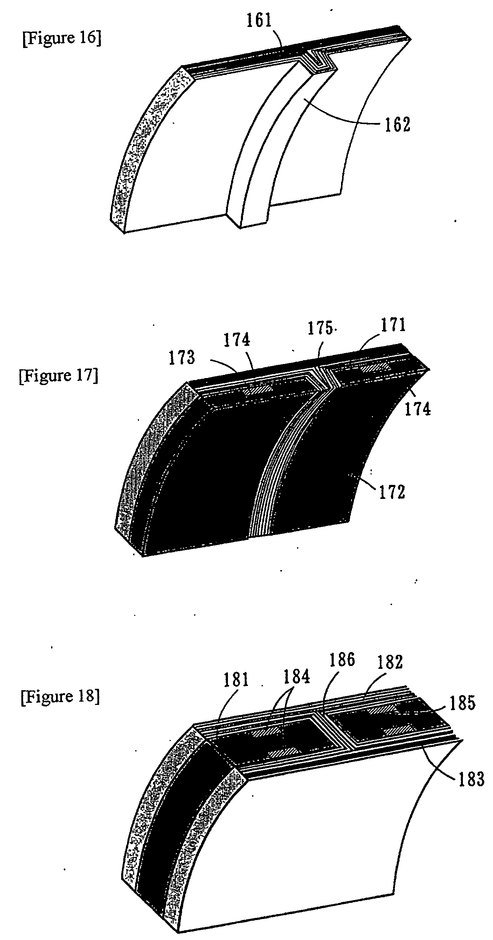

Figure 1 is an image model for facilitating understanding of the present invention and shows a large hollow FRP structure **1** which can be employed for a mode of transport (for example for a small-size plane or motor car) or the like, and which is an integral structure having openings **2**, **3** at the two ends and openings **4** for windows or doors in the centre. Furthermore, it has an interior maximum width which is at least two times the maximum width of the openings **2, 3,** and two openings are provided other than at the ends. Again, in the interior, there is constructed a rib within which a core material is provided as illustrated in Figure 8, and regions other than this are essentially composed of a skin layer and a sandwich layer as in Figure 18. With regard to the dimensions of said structure, it is a comparatively large-size hollow structure of length at least 2 m and interior maximum width at least 1 m.

Figure 2 shows a hollow FRP structure **11** for constructing the monocoque body for a motor vehicle having openings **12** to **17** (rear window **16** is not illustrated). Unlike the jointed structure in which the upper outer shell and the floor are separately moulded and then joined together, as in a conventional monocoque body, it is a hollow FRP structure **11** forming an essentially integral structure moulded in one piece including the floor portion.

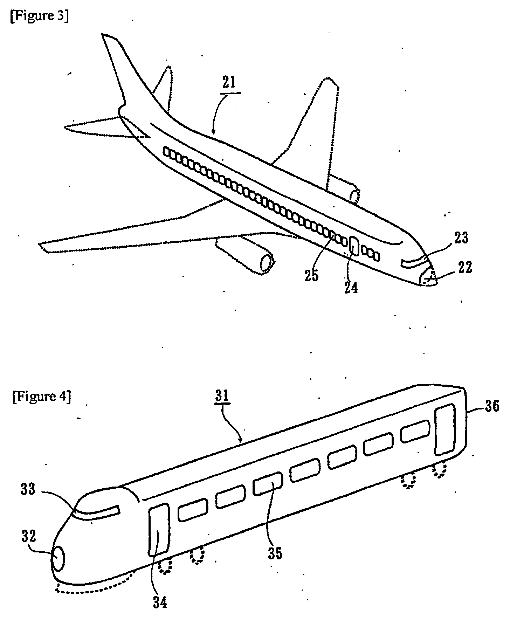

Figure 3 shows a hollow FRP structure **21** for constructing the outer shell of an airplane for a large-size passenger airliner or the like, having at least a front opening **22,** an opening **23** for a front window, an opening for a door **24** and openings for side windows **25.** The inner mould for moulding such a hollow FRP structure of length exceeding 10 m is difficult to fashion as a single body, so construction is effected by fashioning cores of a few m units and then joining these together.

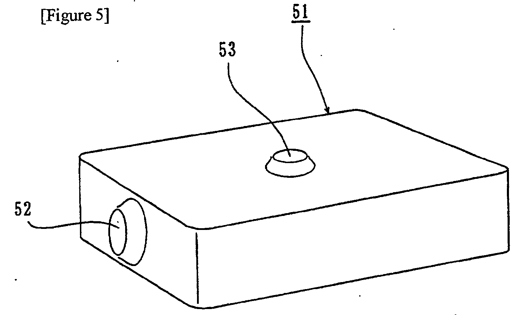

Figure 4 shows a hollow FRP structure **31** for constructing the outer shell of rolling stock for a high-speed train, having at least a front opening **32,** an opening for a front window **33,** an opening for a door **34,** openings for the side windows **35** and an opening for a rear window **36.**

Figure 5 shows a hollow FRP structure **51** for constructing a container having at least two openings **52, 53.** Such a hollow FRP structure **51** can be employed, for example, as a fuel tank, as a container for liquids of various kinds or as a container for (high pressure) gases of various kinds.

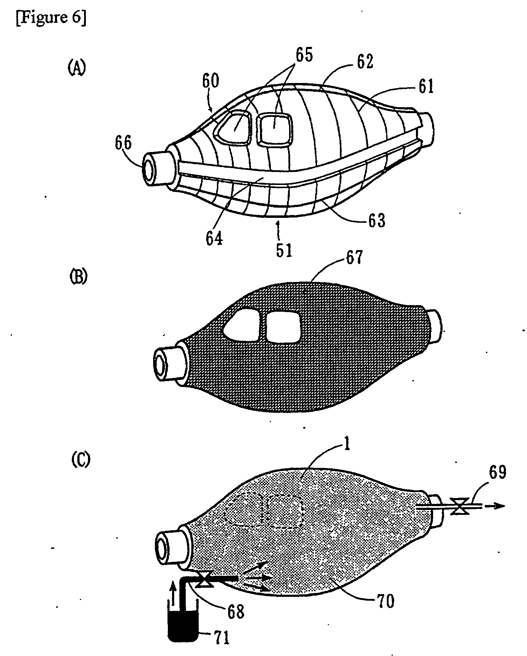

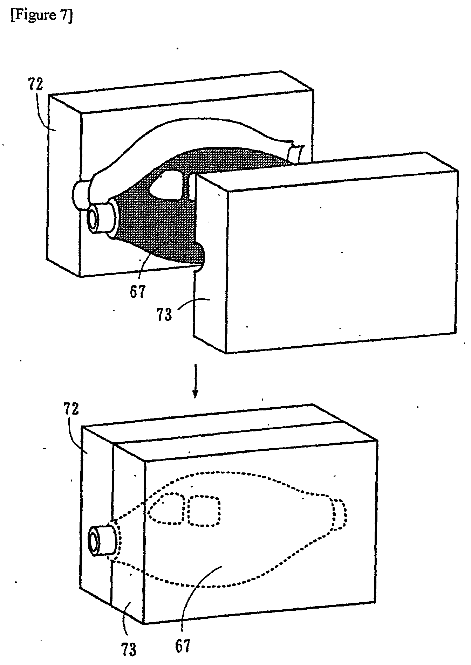

Figure 6 and Figure 7 illustrate specific examples of the production method, taking the case of the hollow FRP structure shown in aforesaid Figure 1.

In the method illustrated in Figure 6, (A) there is produced a hollow inner mould **60,** in the surface of which there are formed circumferential direction grooves **61,** and a lengthwise-direction top groove **62** and bottom groove **63** which connect with said grooves **61** at crossing regions and where the cross-sectional area of these grooves is broader than in the case of the grooves **61.** Moreover, in the surface of hollow inner mould **60** there is a groove **64** of concave shaped cross-section as shown in Figure 8, plus projecting portions **65** which bulge outwards from the surrounding regions, and there is an opening **66** at the end on one side. A preformed material obtained by fixing reinforcing fibre substrate **82** around the periphery of a core **83** by means of a substrate retainer as in Figure 8(A) is arranged in concave groove **64** of inner mould **60,** after which (B) reinforcing fibre substrate **67** is arranged over the entire surface excluding the projecting portions **65** and the entire body covered (C) with a flexible bag **70,** after which a vacuum is applied to the bag interior via a vacuum line **69** connected to top groove **62** and, while so-doing, resin **71** is injected via a resin injection line **68** connected to bottom groove **63.** As well as the injected resin being made to diffuse to the surface of the reinforcing fibre substrate **67** utilizing the grooves **61, 62** and **63,** impregnation of the interior of said reinforcing fibre substrate **67** is effected and, after curing the resin, there is formed hollow FRP structure **1** of specified shape.

In the above-mentioned moulding, the hollow FRP structure **1** is moulded by means of the so-called vacuum bag method but, as shown in Figure 7, the moulding can also be carried out using outer mould parts **72** and **73.**

If an outer mould is used, the outer surface of the moulded product is given a moulded finish by the finished face of the outer mould, so the moulded product quality can be raised and finishing can be performed in various surface states (for example, a super-smooth finished face, a rough face or patterned, etc). Moreover, by applying a gel coating agent to the moulding face beforehand, there is formed following moulding a gel coat layer on the outer surface of the moulded article.

The outer mould shown in Figure 7 is splittable mould made of metal or FRP, or in certain circumstances produced from wood the moulding face of which has been given a sealing treatment with resin or the like. In Figure 7 there is shown a construction which splits in two but, where required, it may also be split further.

With regard to the method of using this outer mould, the inner mould with reinforcing fibre substrate **67** arranged at the surface as aforedescribed (B) is placed between outer mould parts **72, 73,** after which the gap (cavity) between the inner mould **60** on which the reinforcing fibre substrate **67** has been arranged and the outer mould parts **72, 73,** is subjected to vacuum via the aforesaid vacuum line **69.** Furthermore, while not essential, subsequently and/or simultaneously, compressed air (pressurized air) is injected into inner mould **60** from the opening **66** at the end of the inner mould and the entire said inner mould **60** is caused to expand in the direction of the outer mould. In such circumstances, it is preferred that the aforesaid compressed air comprise hot air or that the outer mould parts **72, 73** be heated, so that the inner mould expands easily. Then, in this state, resin **71** is injected into bottom groove **63** via resin injection line **69** in the same way as in the aforesaid vacuum bag method, and as well as there being diffusion to the surface of the reinforcing fibre substrate utilizing the aforesaid grooves **61,** there is also impregnation of said reinforcing fibre substrate, after which the resin is cured. In such circumstances, if, in particular, the outer mould parts **72, 73** are heated, and inner mould **60** and fibre reinforcing substrate **67** are also heated, the viscosity of the resin which is injected and flows over the surface and through substrate **67** is lowered, so there is an enhanced penetration rate and enhanced impregnation properties, and hence this is preferred.

Again, by arranging a resin diffusion medium, comprising a reticulate material of low resin flow resistance, at the inner mould surface in the aforesaid projecting portions **65** and concave region where no grooves are formed as resin channels in the inner mould surface, the flow of the resin is facilitated, and this is further preferred.

Moreover, there may also be arranged a resin diffusion medium such as a reticulate material at the inner surface of the outer mould and/or the surface of the inner mould without forming the grooves **61** provided as resin channels in the circumferential direction of the inner mould surface.

Furthermore, in the case where there is formed an FRP sandwich moulded body composed of the undermentioned core material and an FRP skin layer, since resin channels are provided in the core material, there is no need to form the grooves **61** or provide a resin diffusion medium in those regions of inner mould **60** where said core material is arranged.

Again, by causing inner mould **60** to expand by injecting compressed air into the inner mould as described above, as well as applying pressure to reinforcing fibre substrate **67,** it is also possible to achieve better straight aligning. Consequently, as well as the FRP moulded body fibre volume content being raised, the strength is also enhanced.

After moulding, inner mould **60** may be removed from the FRP moulded body or it can be left as it is. In the case where it is removed, inner mould **60** can be pulled out in a softened state after heating, or if it is extracted by lowering the pressure in the interior of inner mould **60** and allowing it to contract while heating and softening, it can be removed comparatively readily.

Now, a further FRP structure with a hollow section relating to the present invention comprises a connected assembly of a plurality of moulded elements, in at least one part of at least one FRP moulded element thereof there is connected a portion having a hollow section in cross-section and formed to have a substantially integrally-moulded closed space forming region. Specifically the invention can also be applied to FRP structures of the following kind. Specific embodiments are shown in Figures 9 to 15.

Figure 9 shows a hollow FRP structure **91** for a transport mode, which is suitable for example as the outer shell of a small or medium-size aircraft or as a (racing) car body, and which comprises FRP moulded element **95** having openings **92, 93** at the two ends and an opening **94** for a window or door in the centre, and moulded element **96** provided in opening **94** and which is joined to FRP moulded element **95**. Again, structure **91** has an interior maximum width which is more than 1.2 times the maximum width of the openings **92** and **93.** The closed space forming regions **97** of FRP moulded element **95** are formed at the sides of openings **92** and **93,** so both end shapes are smoother and more highly rigid structures than the centre region.

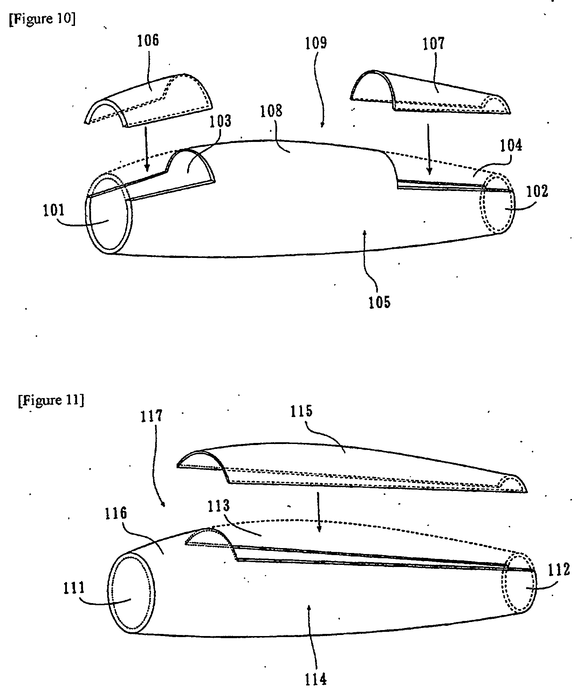

Figure 10 shows a hollow FRP structure **109** for a transport mode which is suitable for example as a motor vehicle body, and which comprises openings **101, 102** at the two ends, FRP moulded element **105** having openings **103, 104** connected to the openings **101, 102** at the upper face side, and moulded elements **106, 107** provided in said openings **103, 104** and which are joined to the FRP moulded body **105.** Again, the interior maximum width is greater than the maximum widths of the openings **101, 102.** The closed space forming region of FRP moulded body **105** is formed in the centre and, in a car, is the position corresponding to the driving seat, and it is constructed so that the required strength and rigidity are readily secured.

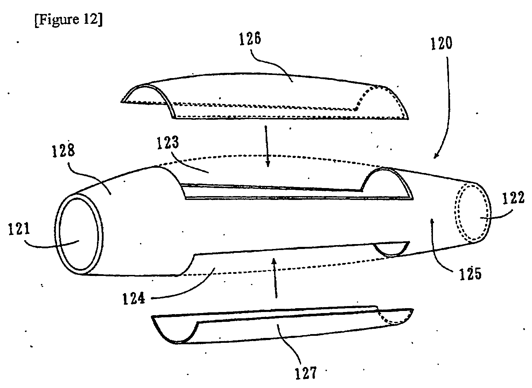

Figure 11 shows a hollow FRP structure for a mode of transport which is suitable for example for the hull of a ship or boat, where the end at one side is a closed portion **111** and that on the other is an opening **112,** and which comprises an FPR moulded element **114** having an opening **113** connected to opening **112** at the upper face side, and a moulded element **115** provided in opening **113** and joined to FRP moulded body **114.** Again, the interior maximum width is greater than the width of opening **112.** The closed space forming region **116** of the FRP moulded body **114** is formed on the closed **111** side. This provides a firm construction at the front portion which, during motion, tends to be subject to a considerable flow load from the fluid.

Figure 12 shows a hollow FRP structure **120** used for a long mode of transport such as, for example, the outer shell of a small or medium size plane or the outer shell of a high speed train carriage, and which comprises openings **121, 122** at the two ends, a FRP moulded element **125** having openings **123, 124** at the upper face side and lower face side respectively, and moulded elements **126, 127** which are provided in openings **123, 124** and are joined to FRP moulded body **125.** Again, the interior maximum width is greater than the maximum widths of openings **121, 122.** The closed space forming regions **128, 129** of FRP moulded body **125** are formed at the sides of the openings **121, 122,** and it is a construction in which the front and rear ends are strong, and the ceiling and floor are separately moulded and assembled together.

Now, in aforesaid Figures 9 to 12, the front and rear ends do not necessarily have to have an open construction and a closed structure may also be suitably formed by means of a lid or the like.

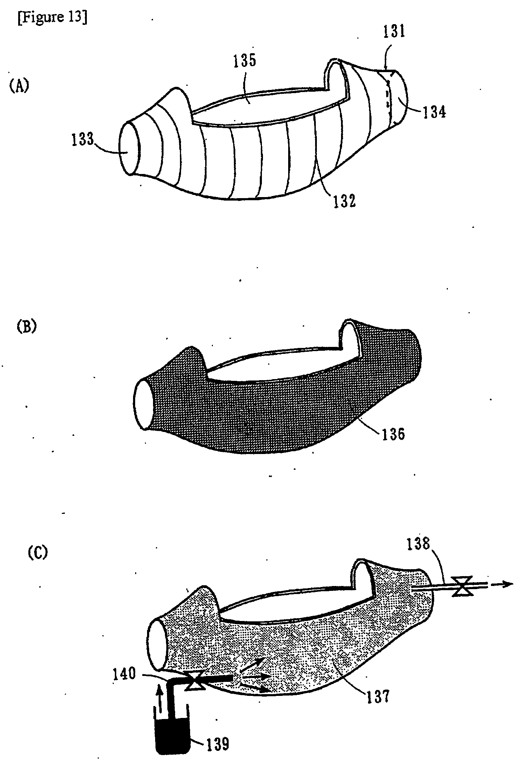

Figures 13, 14 and 15 show specific examples of the method of moulding such FRP moulded bodies, taking the particular example of a hollow FRP structure of the same kind as that shown in aforesaid Figure 9.

In the method shown in Figure 13, (A) there is formed a hollow inner mould **131** having grooves **132** in the surface and having openings **133, 134** and **135** at various positions, then (B) reinforcing fibre substrate **136** is arranged at the surface of this inner mould **111,** and (C) the entire body covered over with a bag **137** and a vacuum applied via vacuum line **138** and resin **139** injected via injection line **140.** As well as the injected resin diffusing to the surface of substrate **136** utilizing the grooves **132** in inner mould **131,** impregnation of the substrate is effected, and after the curing of the resin there is formed the hollow FRP moulded body of specified shape.

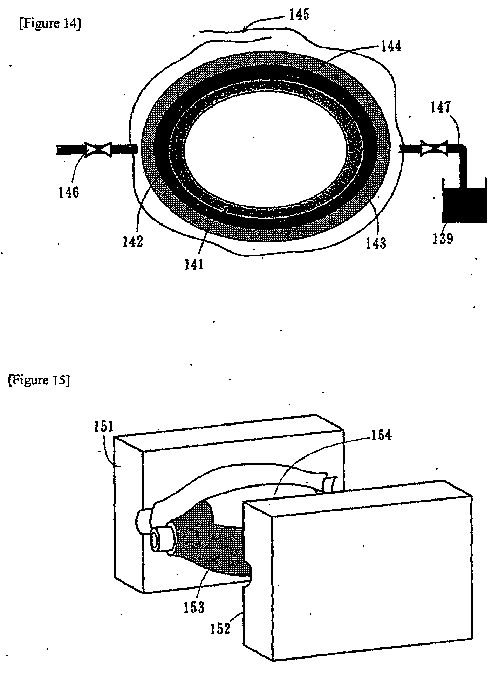

Again, in Figure 14 there is explained another moulding method, by illustrating the moulding in a closed space forming region. A resin diffusion medium **142** (for example a resin diffusion means comprising a reticulate material) is provided on the face of hollow inner mould **141** having no circumferential grooves formed in the surface, and from above there is arranged reinforcing fibre substrate **144** via an interposed release-treated fabric-form sheet **143,** and then the entire body is covered with a bagging material (for example a bagging material comprising a sheet-shaped material). Next, a state of vacuum is produced by subjecting the interior which has been covered with bagging material **145** to evacuation via reduced pressure line **146.** By the action of the vacuum, the reinforcing fibre substrate **144** is tightened by bagging material **145.** Resin is then injected from resin injection line **147** in this state with the fibre volume content raised and, as well as the resin diffusing in the reinforcing fibre substrate **144** face direction, the reinforcing fibre substrate **144** interior is impregnated and, thus, moulding is accomplished.

In the moulding described above, the hollow FRP moulded body was moulded by means of the so-called vacuum bag method but, as shown in Figure 15, moulding of the FRP moulded body can also be carried out using outer mould parts **151, 152.** The outer mould shown in Figure 15 has a structure which splits into two mould parts **151, 152** but, where required, this may be split further. Now, with regard to the inner **mould 154** for forming a moulded body with openings in this way, inside the outer mould injected resin will run into the inner face side from the openings in the inner mould so, as explained in Figure 7 above, there is used an inner mould with a continuous moulding face and without any openings in the moulding face, and either the regions which correspond to the openings in the moulded element are made to project out from the rest of the surface, or alternatively insertion moulds are arranged and the inner mould introduced into the outer mould in a state such that reinforcing fibre substrate **153** is not arranged in these regions. Thereafter moulding may be carried out by the method explained in Figure 7.

The cross-sectional structure of the FRP moulded body can have various constructions. For example, it may have a structure comprising FRP layer **161** and an integrally-provided FRP rib **162** on the inner face thereof as shown in Figure 16, or it may have an integral laminate structure of FRP skin layer **171** and a core material **172** comprising a foam or the like as shown in Figure 17, where the FRP skin layer **171** is reinforced by providing a rib **175** comprising FRP at the ends of core material **172.** Furthermore, the resin **174** remaining in groove **173** used for resin diffusion, which was provided in the surface of core material **172,** may also be used as a rib. Moreover, as shown in Figure 18, there may also be used a sandwich structure by providing FRP skin layers **182, 183** at both faces of core material **181,** where the sandwich structure is reinforced by providing a FRP rib **186** at the ends of core material **181.** Again, the resin **184** inside grooves **185** may also be used as ribs.

Below, explanation is given by providing examples. While not being particularly limiting, the mode described in Example 1 can be suitably employed in the case of planes, especially light aircraft. Again, while not being particularly limiting, the mode described in Example 2, where there is arranged at the bottom a core material sandwiched or wrapped using FRP as a bottom plate, can be suitably employed for land transport such as a motor vehicle.

### Example 1

In order to mould an FRP hollow monocoque body, there was produced a hollow inner mould made of polyethylene terephthalate, as shown in Figure 6(A), by rotational moulding using a metal mould with a projecting rib shape in the inner face. The overall length of this hollow inner mould was 6.5 m; the overall width ranged from a maximum of 1.4 m to a minimum of 0.7 m; the overall height ranged from a maximum of 1.3 m to a minimum of 0.5 m; and the shell thickness was 1 to 3 mm. Furthermore, in the inner mould surface, there was formed in the lengthwise direction a concave groove of width 30-50 mm and depth 40-50 mm by means of the rib shape provided on the mould, and over the entire surface of the inner mould (excepting within the aforesaid concave groove) there were formed circumferential direction grooves of width 3 mm and depth 3 mm, at a 25 mm pitch.

Next, after injecting compressed air of pressure 0.2 kg/cm²G into the interior of this hollow inner mould to raise its rigidity and make distortion difficult, there was arranged a woven fabric mesh for resin flow at the surface of the concave groove provided in the lengthwise direction by means of the projecting rib on the aforesaid metal mould, and on top thereof there was fitted a polyurethane foam core (foam expansion factor = 15 times) of the same shape as said rib, around which had been arranged carbon fibre reinforcing fibre, after which the entire outer surface of the inner mould was covered 1.1-1.5 times the circumferential length in each section with plain-weave PAN-based carbon fibre and glass fibre substrates in such a way that no wrinkles were produced. A certain degree of tension was applied to the substrate so that it tightly followed the surface shape of the inner mould, and suitably cut materials were combined such that substrate did not run over the projections at the various locations corresponding to the doors and windows in the vicinity of the inner mould centre as shown in Figure 6(B). The aforesaid two layers of substrate were fixed to the inner mould by spraying onto the substrates and the inner mould surface a substrate-retainer based on a semicured epoxy resin. Now, the PAN carbon fibre used comprised 2,4000 *{sic}* filaments of tensile strength 4.9 GPa and tensile elastic modulus 235 GPa.

Next, the resin-made inner mould on which the reinforcing fibre substrate had been arranged as described above was set inside a two-part outer mould as shown in Figure 7, and the mould closed. The spaces between the mould parts and between the mould and inner mould (at the two ends) were sealed at this time by means of O-rings (not shown) and a supplementary paste-form sealing agent. Furthermore, 'Teflon' tubes were passed through machined holes provided at the top and bottom of the outer mould parting line, and connection made to lengthwise direction grooves provided at the top and bottom of the inner mould. Of these, a vacuum was applied to the tube connected to the top and the pressure in the cavity region between the inner face of the outer mould and the outer surface of the inner mould was reduced. Moreover, from the openings provided at the ends of the inner mould compressed air of pressure 3 kg/cm²G was introduced and after expanding the inner mould about 3 mm in the direction of the outer mould, a semicured epoxy resin maintained at about 50°C was injected, in this state, from the tube provided at the bottom. Now, from prior to the application of the vacuum, the outer mould had been maintained at 70°C by oven heating.

After injecting the resin and completing the impregnation of the substrate with the resin, the temperature was raised further to 120°C and held thereat for about 1.5 hours, to complete the curing of the resin.

The moulded hollow FRP structure was removed from the outer mould, and the inner mould allowed to contract by reducing the pressure in the inner mould interior, after which the inner mould was removed, to give a hollow integrally-produced structure formed merely from FRP. The volume content of reinforcing fibre in this hollow FRP structure was 57-62%.

The FRP hollow integrally-formed structure thus produced had a ribbed form as designed, and possessed the prescribed strength, rigidity and lightness. Furthermore, its outer face was smooth and, excepting for a very small amount, polishing or other such secondary processing was not required. The amount of voids determined by observation of the cross-section was 0.5%.

### Example 2

A hollow inner mould (made of high density polyethylene terephthalate resin) for forming the FRP hollow monocoque body **11** of a motor car having a windscreen opening **12,** a left door opening **13,** a right door opening **14,** a bonnet opening **15**, a rear window opening **16** (not illustrated) and a boot lid opening **17,** as shown in Figure 2, was constructed by blow moulding using a metal mould having projecting regions provided for forming the (FRP) frames around said motor car bonnet, around the window openings at the front and rear, around the left/right door openings, around the trunk lid opening and at the outer peripheral positions from which the motor vehicle contour was composed, matching the positions where said frames were to be formed. The overall length of said hollow inner mould was about 4.5 m; the overall width over the entire length was about 1.7 m; and the overall height was about 1.4 m in the highest central portion, otherwise it was about 0.7 m. The shell thickness was 1.5 to 2.5 mm. Furthermore, at the inner mould surface, grooves of width 5 mm and depth 3 mm were formed in the circumferential (vertical) direction at a 25 mm pitch, only in those places corresponding to the openings for the car windows and doors, etc. Again, in said hollow inner mould, at the bottom in the front there was an opening (diameter 12 mm) used for introducing compressed air.

Next, in the concave grooves in the hollow inner mould formed by the projections on the aforesaid metal mould, there were fixed polystyrene foam cores (foam expansion factor 20, with grooves for resin flow formed around the periphery) of the same shape as the shape of the concave groove and around which had been arranged a layer each of carbon fibre reinforcing fabric (produced by Toray Industries Inc., Torayca T700S) and glass fibre chopped strand mat (produced by the Nitto Boseki Co., MC 300). Subsequently, there was arranged at the inner mould bottom, for the floor of the motor car, a polystyrene foam core (foam expansion factor = 10, thickness 6 mm, with small grooves of width 1 mm and depth 2.5 mm for resin flow formed on each face excepting the top face) sandwiched between two layers [top face] of carbon fibre reinforcing fabric (made by Toray Industries, Torayca T700S) and two layers [bottom face] of glass fibre chopped strand mat (produced by the Nitto Boseki Co., MC450) to form a structure as shown in Figure 18. Then, the entire outer surface apart from this was covered with plain weave glass fibre substrate (1 layer each of roving cloth WR570 and chopped strand mat MC380, made by the Nitto Boseki Co.) such that no wrinkles were produced. A certain degree of tension was applied to the substrate so that it tightly followed the surface shape of the inner mould, and there were combined suitably cut materials such that the substrate did not run over the projections at the various locations on the inner mould corresponding to the bonnet at the front, the doors and windows in the vicinity of the centre and the boot lid at the rear. A substrate-retainer based on a semicured epoxy resin was sprayed onto the substrates and the mesh fabric used for resin flow or the fabric used for release, which covered the inner mould surface (excepting the window and door regions), so as to secure them.

Each of the substrates had been preformed beforehand by a preparatory process outside the mould, and the upper portions other than the floor were constructed with multiple division in the longitudinal direction and with the circumferential direction length in each case being less than one lap, while, at the floor face, by overlap (overlapping region at least about 50 mm) with the substrate for the floor, a fastened state was produced.

Next, the resin inner mould on which the reinforcing fibre substrate had been arranged as described above was introduced into a two-part outer mould as shown in Figure 7. After having applied a release agent to the moulding face of said outer mould beforehand, there was applied a gel coat for finish coating. Thereafter, resin injection and curing were performed in the same way as in aforesaid Example 1, followed by mould release, and there was obtained a FRP moulded body with good properties, the outer surface of which had been given a gel coat finish. The resin employed here was a rapid curing epoxy resin (bifunctional epoxy resin and amine hardener), and the time required from layup of the aforesaid reinforcing fibre substrate on the inner mould surface to resin injection and mould release was about 10 minutes.

Subsequently, the FRP moulded body was introduced into an oven at 100°C and held for about 0.7 hours, to complete the curing of the matrix resin of the FRP moulded body.

Furthermore, after allowing the inner mould to contract by lowering the pressure inside the inner mould, said inner mould was removed, to complete the production of the hollow monocoque body for an FRP motor car with openings for windows and doors.

The FRP hollow monocoque body produced had the strength, rigidity and lightness required for practical use as designed. The reinforcing fibre volume content of the hollow FRP structure was 56% to 63%, and the amount of voids in each region determined from observation of the cross-section was 0.8% at maximum.

### Industrial Application Potential

In accordance with the present invention, it is possible to produce efficiently, cheaply and easily, hollow FRP structures useful for modes of transport of various kinds such as planes, motor vehicles and the like, and for comparatively large containers of complex shape.

## Claims

1. A fibre-reinforced plastic structure with a hollow section which is **characterized in that**
(A) it is a fibre-reinforced plastic structure with a hollow section which is provided with at least one opening and with a main body portion having in the interior a cavity of maximum width greater than the maximum width of the aforesaid opening(s),
(B) the aforesaid main body portion is composed of fibre-reinforced plastic where reinforcing fibre has been impregnated with synthetic resin and, furthermore,
(C) the aforesaid main body portion has a solid of non-revolution shape where the interior maximum width (F) of the cavity is at least 0.5 m and the ratio (F/f) of the interior maximum width (F) of the cavity to the maximum width (f) of the aforesaid opening(s) lies in the range 1.1 to 500, and
(D) furthermore, the aforesaid main body portion is formed as an integral construction in which its totality substantially has no regions which are joined.

2. A fibre-reinforced plastic structure with a hollow section according to Claim 1 which is **characterized in that**, at the inner circumferential face of the aforesaid main body portion, there is a projecting rib which projects in the radial direction thereof.

3. A fibre-reinforced plastic structure with a hollow section according to Claim 2 which is **characterized in that** the aforesaid projecting rib has a frame structure with a core material present in the interior and, furthermore, with the periphery of the core material enveloped by a skin layer containing reinforcing fibre.

4. A fibre-reinforced plastic structure with a hollow section according to any of Claims 1 to 3 which is **characterized in that**, in the fibre-reinforced plastic of the aforesaid main body portion, there are substantially no reinforcing fibres extending continuously over two or more laps in the circumferential direction.

5. A fibre-reinforced plastic structure with a hollow section according to any of Claims 1 to 4 which is **characterized in that** a closed space is formed in the main body portion.

6. A fibre-reinforced plastic structure with a hollow section according to Claim 5 which is **characterized in that**, as well as the section in the aforesaid circumferential direction forming a closed space, a portion formed as an integral construction substantially having no joined regions is positioned at the end or at a central region of the aforesaid main body portion.

7. A fibre-reinforced plastic structure with a hollow section which is **characterized in that**
(A) it is composed of a plurality of moulded elements,
(B) at least one of these moulded elements is a structure which is provided with at least one opening and with a main body portion having a cavity in the interior and, furthermore, the section thereof has a solid of non-revolution shape,
(C) the aforesaid main body portion is composed of fibre-reinforced plastic where the reinforcing fibre has been impregnated with synthetic resin and, furthermore,
(D) the aforesaid main body portion has in at least one location a portion forming a closed space in the circumferential direction section and which is formed as an integral construction substantially having no joined regions.

8. A fibre-reinforced plastic structure with a hollow section according to Claim 7 which is **characterized in that** the aforesaid opening is positioned at an end portion of the structure comprising a plurality of moulded elements.

9. A fibre-reinforced plastic structure with a hollow section according to Claim 7 or Claim 8 which is **characterized in that**, in the aforesaid structure, the interior maximum width (F) of the cavity is at least 0.51 m and the ratio (F/f) of the internal maximum width (F) of the cavity to the maximum width (f) of the aforesaid opening lies in the range 1.1 to 500.

10. A fibre-reinforced plastic structure with a hollow section according to Claim 9 which is **characterized in that** at the inner surface facing the cavity of the aforesaid structure, there is a rib projecting in the radial direction thereof.

11. A fibre-reinforced plastic structure with a hollow section according to Claim 10 which is **characterized in that** the aforesaid projecting rib has a frame structure with a core material present in the interior and the periphery thereof enveloped by a skin layer containing reinforcing fibre.

12. A fibre-reinforced plastic structure with a hollow section according to any of Claims 1 to 11 which is **characterized in that** the main body portion of the aforesaid structure is formed with a shell comprising aforesaid skin layer positioned on the outside and core material positioned on the inside.

13. A fibre-reinforced plastic structure with a hollow section according to Claim 12 which is **characterized in that** the aforesaid structure is formed with a shell where skin layer comprising fibre-reinforced plastic is further laminated on the inside of the aforesaid core material.

14. A fibre-reinforced plastic structure with a hollow section according to Claims 12 or 13 which is **characterized in that** the aforesaid core material has a rib which extends in the radial direction of the structure.

15. A fibre-reinforced plastic structure with a hollow section according to any of Claims 3 to 6 and 11 to 14 which is **characterized in that** the aforesaid core material comprises a foam.

16. A fibre-reinforced plastic structure with a hollow section according to any of Claims 3 to 6 and 11 to 15 which is **characterized in that** a groove is formed in the surface of the aforesaid core material.

17. A fibre-reinforced plastic structure with a hollow section according to any of Claims 1 to 16 which is **characterized in that** a liner is provided in at least one part of the inner face of the aforesaid main body portion.

18. A fibre-reinforced plastic structure with a hollow section according to Claim 17 which is **characterized in that** the aforesaid liner has a plurality of concave grooves.

19. A fibre-reinforced plastic structure with a hollow section according to any of Claims 1 to 18 which is **characterized in that** the aforesaid reinforcing fibre is at least one type from amongst carbon fibre, glass fibre, aramid fibre, high density polyethylene fibre and polyarylate fibre.

20. A fibre-reinforced plastic structure with a hollow section according to any of Claims 1 to 19 which is **characterized in that** the aforesaid reinforcing fibre comprises carbon fibre tow, where one tow has a number of single filaments in the range 12,000 to 200,000.

21. A fibre-reinforced plastic structure with a hollow section according to any of Claims 1 to 20 which is **characterized in that** the void content of the aforesaid main body portion lies within the range 2% and below, by volume.

22. A fibre-reinforced plastic structure with a hollow section according to any of Claims 1 to 21 which is **characterized in that** the aforesaid synthetic resin is at least one type from amongst epoxy resins, unsaturated polyester resins, vinyl ester resins and phenolic resins.

23. A fibre-reinforced plastic structure with a hollow section according to any of Claims 1 to 22 which is **characterized in that** a covering layer is integrally formed at the outer face of the main body portion.

24. A fibre-reinforced plastic structure with a hollow section according to Claim 23 which is **characterized in that** the covering layer is a gel coat layer.

25. Transport modes **characterized in that** they have, as part thereof, a fibre-reinforced plastic structure with a hollow section according to any of Claims 1 to 24.

26. A method for the production of a fibre-reinforced plastic structure with a hollow section, which is **characterized in that** it proceeds via at least the following stages in turn.
(A) An inner mould preparation stage in which an inner mould of cross-section having a non-circular sectional shape is positioned on a stand
(B) A substrate arrangement stage in which substrate comprising in part or in total reinforcing fibre is arranged at the surface of the aforesaid inner mould
(C) A pressure-reduction stage in which the top of the aforesaid substrate is covered with a bag and the interior pressure of said bag is reduced to below atmospheric pressure
(D) A synthetic resin impregnation stage in which synthetic resin is injected into the aforesaid reinforcing fibre and the interior of the substrate impregnated by uniform diffusion of said resin in the reinforcing fibre substrate face direction

27. A method for the production of a fibre-reinforced plastic structure with a hollow section according to Claim 26 which is **characterized in that** the entire structure is also cured within the temperature range 50 to 200°C, and integral moulding effected.

28. A method for the production of a fibre-reinforced plastic structure with a hollow section, which is **characterized in that** it proceeds via at least the following stages in turn.
(A) An inner mould preparation stage where an inner mould of cross-section having a non-circular sectional shape is positioned on a stand
(B) A substrate arrangement stage in which substrate comprising in part or in total reinforcing fibre is arranged at the outer surface of the aforesaid inner mould
(C) An outer mould arrangement stage in which the outer periphery of the aforesaid reinforcing fibre arranged substrate is covered with an outer mould
(D) A pressure-reduction stage in which the pressure is reduced between the aforesaid outer mould and the inner mould
(E) A synthetic resin impregnation stage in which synthetic resin is injected into the aforesaid reinforcing fibre and the interior of the substrate impregnated by uniform diffusion of the resin in the reinforcing fibre substrate face direction

29. A method for the production of a fibre-reinforced plastic structure with a hollow section according to Claim 28, which is **characterized in that** at least a part of the outer face of the inner mould is covered with a sheet-shaped covering material, and substrate comprising in part or in total reinforcing fibre is arranged on top thereof, after which the outer periphery is covered over with an outer mould, and the pressure between said outer mould and the inner mould then reduced and synthetic resin injected in a state with the aforesaid covering material caused to expand or move in the outer mould direction, so that said resin diffuses through the reinforcing fibre substrate in the face direction and, in this way, the reinforcing fibre substrate interior is impregnated with the resin.

30. A method for the production of a fibre-reinforced plastic structure with a hollow section according to any of Claims 26 to 29, which is **characterized in that** there is used a hollow inner mould in the inner mould arrangement stage (A).

31. A method for the production of a fibre-reinforced plastic structure with a hollow section according to Claims 28 or 29, which is **characterized in that** there is used an inner mould comprising an elastic material in the inner mould arrangement stage (A).

32. A method for the production of a fibre-reinforced plastic structure with a hollow section according to Claims 28, 29 or 31 which is **characterized in that**, in the aforesaid inner mould arrangement stage (A), the inner mould interior is pressurized with a fluid and said inner mould made to expand in the outer mould direction.

33. A method for the production of a fibre-reinforced plastic structure with a hollow section according to Claim 32 which is **characterized in that**, in the aforesaid inner mould preparation stage (A), the fluid used for pressurizing the interior of the inner mould is compressed air and the applied pressure thereof lies within the range 0.049 to 0.98 MPa (0.5 to 10 kg/cm²G).

34. A method for the production of a fibre-reinforced plastic structure with a hollow section according to Claims 26 to 33 which is **characterized in that**, in the aforesaid inner mould preparation stage (A), there is employed an inner mould having resin channel grooves in the outer face and the synthetic resin is injected into the reinforcing fibre substrate from said grooves.

35. A method for the production of a fibre-reinforced plastic structure with a hollow section according to any of Claims 29 to 34 which is **characterized in that**, in aforesaid substrate arrangement stage (B), there is employed a resin diffusion medium which enables the resin to diffuse into the aforesaid covering material.

36. A method for the production of a fibre-reinforced plastic structure with a hollow section according to Claim 35 which is **characterized in that** there is used a reticulate material as the aforesaid resin diffusion medium.

37. A method for the production of a fibre-reinforced plastic structure with a hollow section according to any of Claims 26 to 36 which is **characterized in that** there is used a plastic, a rubber material, a water-soluble polymer material or a wood material as the aforesaid inner mould.

38. A method for the production of a fibre-reinforced plastic structure with a hollow section according to any of Claims 26 to 37 which is **characterized in that** like aforesaid structures are mutually joined together by a local vacuum moulding method to form a single body.

39. A method for the production of a fibre-reinforced plastic structure with a hollow section according to any of Claims 26 to 38 which is **characterized in that**, in the aforesaid substrate arrangement stage (B), when arranging the substrate comprising reinforcing fibre there is used, between substrates or between the substrate and inner mould a substrate retainer which secures the substrate.

40. A method for the production of a fibre-reinforced plastic structure with a hollow section according to any of Claims 26 to 39 which is **characterized in that** there is used an inner mould which is moulded as a hollow body by means of the blow moulding method.

41. A method for the production of a fibre-reinforced plastic structure with a hollow section according to any of Claims 26 to 40, which is **characterized in that** it has an inner mould removal stage in which the inner mould is removed from the integrally-moulded structure.

42. A method for the production of a fibre-reinforced plastic structure with a hollow section according to any of Claims 26 to 40 which is **characterized in that** the inner mould is integrally coupled to the structure and left within the integrally-moulded structure.

43. A method for the production of a plurality *{sic}* of fibre-reinforced plastic structures with hollow sections which is **characterized in that**, it is a method for the production of a fibre-reinforced plastic structure composed of a plurality of moulded elements, at least one of which moulded elements has a section which constitutes a solid of non-revolution shape and which is provided with at least one opening and with a main body portion having a cavity in the interior,
and when joining together the aforesaid moulded elements, reinforcing fibre is arranged spanning the region of join between the moulded elements, and the regions of join are locally covered with bags from above the reinforcing fibre, after which the pressure inside the bags is reduced and resin injected, and impregnation effected, so that the moulded elements are mutually connected together.
